# EUROPEAN PATENT SPECIFICATION

(11) **EP 1 379 853 B1**
(45) Date of publication and mention of the grant of the patent: **09.04.2008**
(21) Application number: 02709445.7
(22) Date of filing: 07.02.2002
(51) Int. Cl.: G01N 1/40, G01N 15/02, G01N 30/00, G01N 1/22

(54) **METHOD AND APPARATUS FOR AUTOMATED OPERATION OF IMPACTORS**
VERFAHREN UND VORRICHTUNG ZUM AUTOMATISCHEN BETRIEB VON IMPAKTOREN
METHODE ET APPAREIL POUR L'OPERATION AUTOMATIQUE DES IMPACTEURS

(30) Priority: 07.02.2001 US 266984 P
(43) Date of publication of application: 14.01.2004
(73) Proprietor: MSP CORPORATION, Minneapolis MN 55414 (US)
(72) Inventor: ROBERTS, Daryl, L., Blaine, MN 55449 (US); MARPLE, Virgil, A., Maple Plain, MN 55359 (US); MILLER, Nicholas, C., White Bear Lake, MN 55110 (US)
(74) Representative: McLeish, Nicholas Alistair Maxwell
(86) International application number: PCT/US2002/003893
(87) International publication number: WO 2002/063277

(56) References cited:
- DE-A- 10 028 599
- DE-A- 10 149 048
- GB-A- 2 369 784
- US-A- 2 989 061
- US-A1- 2001 013 244
- US-A1- 2001 029 793

## Description

### BACKGROUND OF THE INVENTION

The present invention relates to a process for automating the operation of multiple compartment impactors and apparatus primarily for use in determining the size distribution of particles in an aerosol emitted from metered dose inhalers, dry powder inhalers, and nebulizers, which dispense inhalable therapeutic drugs. The process is an automated process in various embodiments that are designed for impactors that have external cups or cavities forming the impaction surfaces, and inlets and pre-separators for such impactors.

In the prior art, various types of impactors have been advanced that will classify particles according to size using cascade impaction surfaces with an aerosol flow through the impactor. The principles of particle classification impaction are well known and particle classification or cut points can be very closely controlled for classification of particles into separate size ranges.

DE 100,28,599 discloses a cascade impactor formed to classify particles carried in a flow through the impactor. The impactor has collection chambers arranged to minimize space and yet provide a large flow passageway. The collection chambers may be tear-shaped and nested together.

At the present time, the preparation of the samples by adding solvent, extracting a sample, and then after the sample has been transported to the vials used by the analysis instruments, generally a high performance chromatograph, the steps of cleaning the impactor components, washing them, and reassembling them is primarily manual, and slow.

### SUMMARY OF THE INVENTION

According to the present invention there is provided a method of processing particles classified into separate size ranges and an impactor processing apparatus as claimed in the appended claims.

The present invention relates to a process for automating or semi-automating sampling particles dispensed into a set of particle impactor cups and/or handling the classified particles from each impactor cup and thereafter for analysis by a chromatograph or other suitable instrument.

The method of the present invention relates to a method of processing particles classified into separate size ranges, each size range being in a separate impactor compartment supported in a common compartment manifold. The method comprises the steps of moving the compartment manifold and supported compartment from the impactor to a service manifold overlying the compartments, adding a solution for dissolving material in the compartments, and simultaneously moving the compartment manifold and service manifold as a unit under power to enhance dissolution of particles.

The method of using a service manifold handling a number of impactor cups is used in various steps of cleaning and preparation.

In another aspect, the present invention includes a method of handling and cleaning a housing having one or more chambers from which samples of interest have been recovered, comprising supporting the housing on a cradle pivotable about an axis; adding cleaning solution to the chamber in the housing; pivoting the cradle about the axis to move the cleaning solution across surfaces defining the chamber; and removing the cleaning solution from the chamber. The housing preferably has several impactor chambers of cups held in a manifold for simultaneous operations on all cups in the manifold.

In the process, the assembly of the inlet or induction port, a preseparator, an impactor cover and seal body can be maintained in a single dosing station on a turntable or can be used with a conveyor belt that will move the cup manifold to different stations for adding solvent and extracting samples. The wash and dry station, and the coating station can be sequentially used. Thus, a highly automated system is utilized in the present method.

### BRIEF DESCRIPTION OF THE DRAWINGS

Figure 1 is an assembled view of an impactor apparatus used for determining distribution of particles from a metered dose or dry powder inhaler;
Figure 2 is a plan view of the impactor of Figure 1;
Figure 3 is a sectional view taken on line 3--3 in Figure 1;
Figure 4 is a sectional view taken as on line 4--4 in Figure 2 illustrating the arrangement of impactor cups used in the impactor apparatus of Figure 1;
Figure 5 is a sectional view taken on line 5--5 in Figure 3;
Figure 6 is a sectional view taken on line 6--6 in Figure 3;
Figure 7 is a plan view of an impactor cup manifold used with the impactor of Figure 1;
Figure 8 is a plan view of one form of a service manifold used with the present process;
Figure 9 is an end view of the service manifold of Figure 8;
Figure 10 is a schematic side view of a service manifold drive and support for rocking and rotating the service manifold about a longitudinal axis;
Figure 11 is a schematic end view of Figure 10;
Figure 12 is a side view of a device for supporting and holding a USP standard throat during sample recovery and washing;
Figure 12A is an end view of the device of Figure 11;
Figure 13 is a side view of a device used for recovering samples from and washing the preseparator;
Figure 14A-14K are schematic representations of a first process for automating the operation and recovery of an impactor process used with metered dose inhalers, with dry power inhalers and/or nebulizers;
Figure 15 is a further exemplary schematic representation of the components of the impactor assembly, illustrating a form of the invention that permits movement of the particle containing cups between a service manifold and the impactor device;
Figure 16 is a schematic representation of the ducting for the service manifold, which can use some of the same ducts, which illustrates the different inputs;
Figure 17 is a schematic representation of a frame that will support the cover and seal body in a fixed position, and shows a modification of use of service manifolds to include a coating station for coating the impactor surface of the cups;
Figure 18 is a schematic representation of a pivoting arm having a gripper for lifting the induction port or inlet from the preseparator, and transporting it to a location for processing, where it can be inserted into the device shown in Figure 12;
Figure 19 is a schematic representation of a side view of the device shown in Figure 18;
Figure 20 is a top view of a robotic arm assembly similar to that shown in Figure 18, but adapted for removing the preseparator from an impactor cover and seal body assembly and moving it to a second position where it can be installed in a sample recovery and cleaning station for the preseparator shown in Figure 13;
Figure 21 is a side elevational view of the device of Figure 20;
Figure 22 is a plan view of a robotic arm assembly showing a turntable for holding individual impactor cups that uses conventional techniques for loading vials with a sample from each cup;
Figure 23 is a schematic top plan view of a turn table having a plurality of stations holding an impactor device and the service manifolds used for handling a complete cup manifold for various functions;
Figure 24 is a side elevational view of the turntable of Figure 23; and
Figure 25 is a schematic representation of a plurality of stations used with a continuous conveyor for moving the cup manifold, comprising the impaction cups, from a dosing station to the required stations for obtaining a sample, washing, rinsing and drying the cups;
Figure 26 is a schematic representation of an automated arrangement for delivery of a solvent to a typical impactor cup in the cup manifold;
Figure 27 is a schematic representation of an automated arrangement for withdrawing a sample, and flushing and drying the sample line; and
Figure 28 is a schematic view of syringes for injecting solvent into a service manifold.

### DETAILED DESCRIPTION OF THE ILLUSTRATIVE EMBODIMENTS

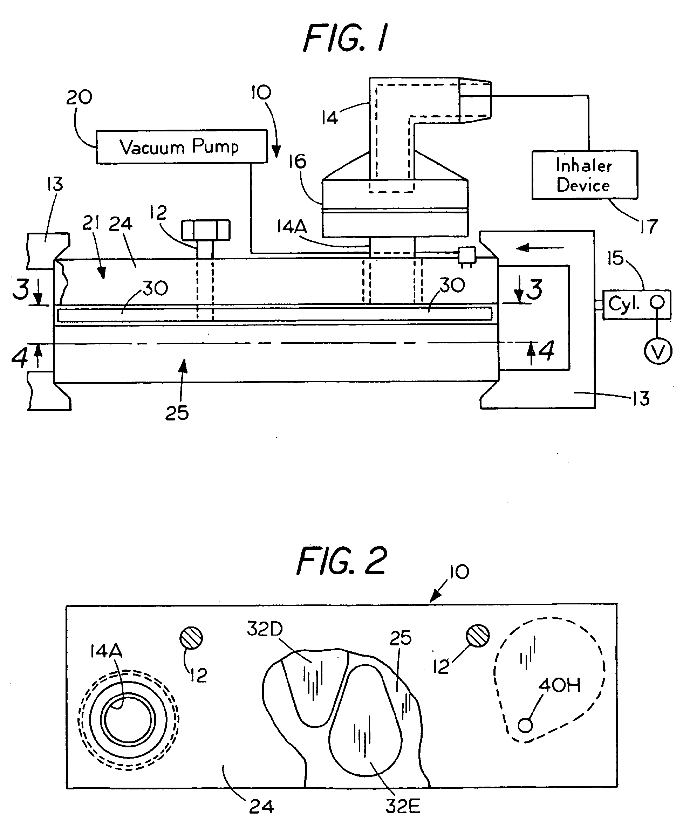

A general form of an impactor that is handled as will be described in the present invention illustrated in Figures 1 through 7 comprises an impactor assembly 10, which has a cover 24, with an aerosol inlet induction port 14. The induction port or inlet 14 can be a standard USP type inlet tube. A pre-separator 16 is illustrated on the aerosol inlet in Figure 1. The pre-separator 16 separates out large particles.

The aerosol that is passed through the impactor 10 is an aerosol generated by an automatic dosing device or inhaler 17, or other device that may be a liquid or dry powder drug inhaler, such as those used to control asthma and similar problems. Commercially available dosing devices are used for these procedures. The amount of flow from each dose or charge is small, so the internal volume of the impactor 10 must be kept low. The flow rate through the impactor will be generated in a selected manner, for example by providing a vacuum pump such as that shown at 20 on an exhaust opening (see Figure 2) from the impactor housing 21 comprising the cover and seal plate assembly. This type of impactor is described in U.S. Patent No. 6,723,568.

The lid or cover 24 is sufficiently thick to include flow passageways on the underside. The lid or cover 24 has an opening for the inlet pipe 14A to pass through to seal plate 30 which is fastened to the underside of the cover with removable screws 12. The cover and seal plate assembly 21 are held in a support frame and manipulated in the process of the invention. The cover 24 is clamped to a base cup manifold 25, as shown with power, automatic clamps 13, operated with pneumatic cylinders 15, if desired. Only one cylinder if needed, if one clamp 13 is mounted on a fixed support to act as a force reaction member. The cylinders 15 can be retracted so the clamps release the cups and manifold 25, for processing.

The cup manifold has a number of egg shaped or tear drop shaped impactor particle collection chambers or cups 32A-32H to be positioned under a series of nozzles carrying the flow through the impactor. These cups can be removable and held in a frame that can transport all of the cups as a unit.

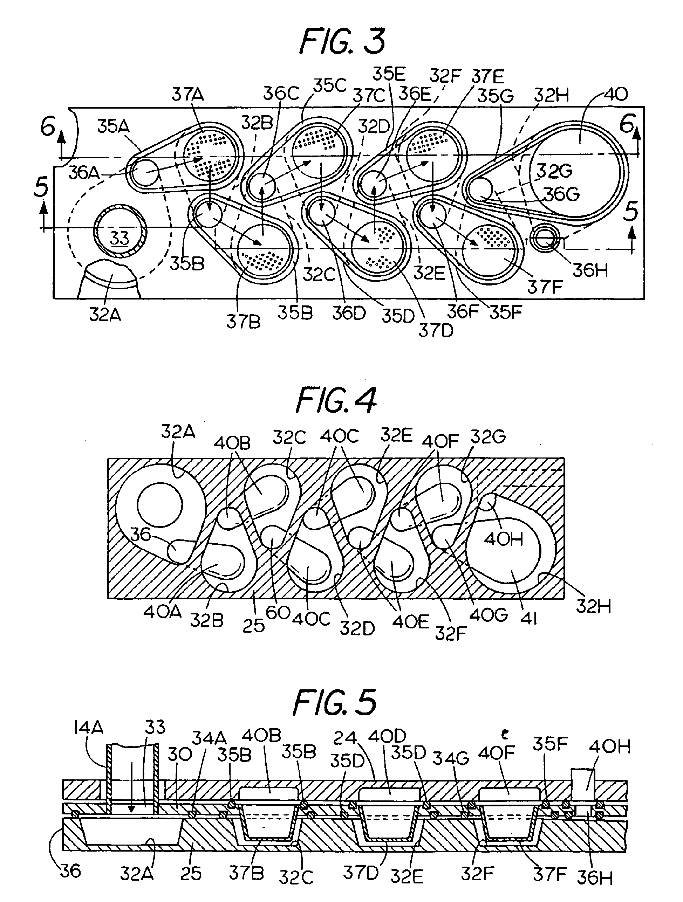

As shown in Figures 3, 4, 5 and 6 seal plate 30 is positioned below the cover 24 and has seals in grooves on both sides to seal cross flow passageways on the underside of the cover 24 and, on the opposite or bottom side of the seal plate 30, to seal around each of the impaction chambers or cups 32A-32H to define sealed passageways including the cups for forming the flow path. The inlet tube 14A passes through cover 25 and the seal plate 30 and opens through an inlet opening 33 into the first impaction stage cup 32A. In Figure 3 the seal plate 30 is shown with the seals 35A-35G that seal around cross flow passageways 40A-40G in the cover. Also, the nozzles 37A-37F are shown and they are supported on the seal plate over the cups 32B-32G.

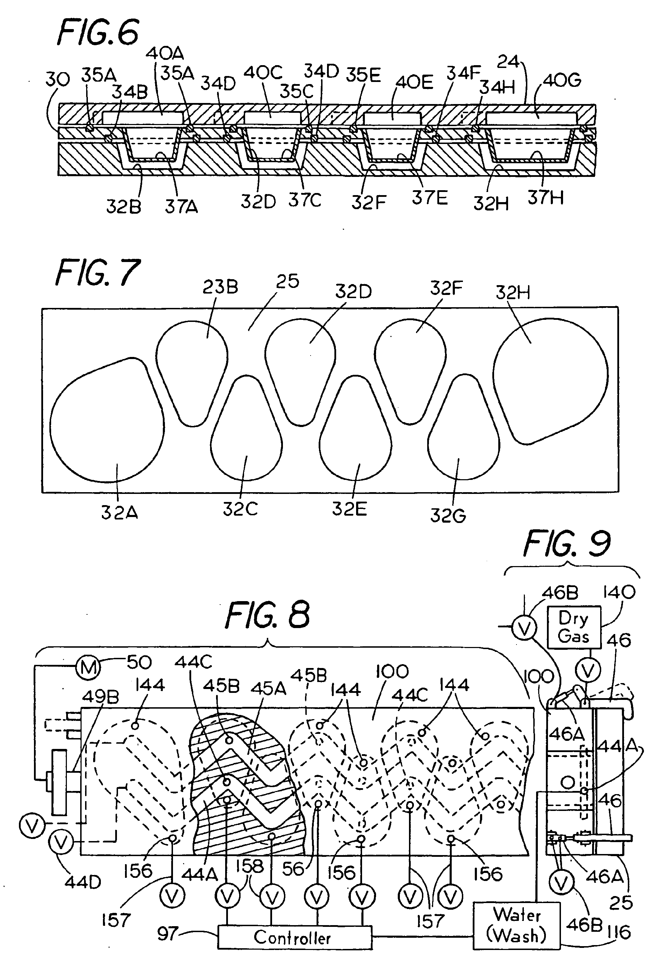

The first stage cup 32A forms an impactor surface and underlies the inlet opening 33. The top opening of the cup 32 is sealed with a seal 34A on the seal plate 30 and extends transversely of the impactor to a vertical passageway 36A (Figure 3) that opens through the seal plate 30 to a crossover passageway 40A (Figure 6) formed on the underside of the cover 24.

Figure 4 is a sectional view of the cup manifold, looking up toward the cover, as shown in Figure 1, with the cups and seal plate removed, so the interstage passages 40A-40G on the underside of the cover 24 can be seen. The cup inlets on the base frame 25 are shown in Figure 3. The seals 34A-34H follow the shape of the cup openings in frame 25 Figure 4, and as shown in dotted lines in Figure 3.

The crossover or interstage passageways 40A-40G leads to a nozzle passageway or opening in seal plate 30 (Figures 3 and 6) having nozzles 37A-37F that have openings of desired size, and a desired number are provided. The aerosols containing the particles will discharge into each stage impactor surface of the cups 32A-32H of the cup manifold 25 by flowing through the cups in sequence and then through the crossover passageways in the cover. The tear drop shaped cups have wide ends under the respective nozzles 37A-37F and narrow opposite ends. The small ends of the cups align with passageways or ports 36A-36G through the seal plate and opens the respective tear drop shaped passageway in the cover 24.

The large ends of the passageways 40A-40E overlie the respective nozzles 37A-37F, which discharge into the impactor cups 32, and the impactor cups collect the respective size particles for analysis.

The passageway 40G may open to a final stage micro orifice filter nozzle 37H in cup 32H, if desired. A fluid flow outlet opening 36H opens to a short cross passageway 40H (Figure 4) in the cover 24. The passage 40H is a short cross over passageway that opens through the cover. A suitable flow line can be coupled to the passageway 40H and to the vacuum source 20 to establish an air flow from the dosing device.

The passageways in the cover that connect between nozzles are all sealed with properly shaped O-ring seals, as shown. The impactor cups in the cup manifold are also sealed with tear drop shaped O-ring seals.

The cup manifold 25 of Figure 7 is separated from the cover and seal plate assembly during the process, and sealed against a service manifold that has seals on its bottom side to seal around each cup. The cups are shown as part of the manifold, and, if desired, the cups can be made as individual removable cups shown as cups 32G and 32H where a lip fits into an opening of a support plate as shown by the dotted lines.

In Figures 8 and 9, a service manifold 100 is shown schematically. The service manifold 100 is used for providing various functions in the operation of the present automatic process. Service manifold 100 schematically shows typical passageways and ports, and will illustrate how such passageways and ports can be used. The service manifold 100 is made to overlie the cup manifold 25 and provides a way of adding and removing fluids (liquids and gases) from the impactor cups and for passing gases over the impaction cups.

The service manifold 100, as shown, has ports, such as ports 144 for adding solvent to the cup manifold 25 and the cups 32A-32H in the cup manifold, and has ports 156 for extracting liquid samples of dissolved particles from the cups as will be more fully explained. All of the ports that are used can be connected through valves, such as valves 158 shown in Figure 8. The valve 158 which can be electric (solenoid) valve controlled by a controller 97.

The ports can be connected through fittings that are in turn connect to flexible small diameter lines 157 that are sufficiently long so that the service manifold can be rotated about a central axis as will be shown. The lines 157 can be managed in any desired manner, but they needed to have sufficient length to permit the manifold to be rotated for draining.

The service manifold 100 can be made of Plexiglas, or other suitable material, and as shown can have a longitudinally extending passageway 44A connected to a water or wash solution source 116. The passageway 44A is zigzagged, so each opening 44C that opens from the passageway 44A to a respective cup 32A-32H in an attached cup manifold 25, overlies a portion of that cup 32. The passageway 44A can discharge liquid or gas out the end of the service manifold 100, opposite from the connection of the passageway 44A to the water source 116. A valve 44D can be used to close off the outflow so that the amount of water discharged can be regulated, and water or wash solution source 116 has a shutoff valve as well so that the passageway 44A can be isolated.

A longitudinally zigzagged drying gas passageway 45A is also formed in the service manifold 100, and has a separate opening 45B from the passageway over each of the cups in the cup manifold. The passageway 45A is connected at one end to a dry gas source 140. When washing, rinsing, or drying the cups 32A-32H automatically, water or the wash solution is introduced through passageway 44A, and drying gas can be introduced through the passageway 45A. Zigzagging the passageways is not necessary if directly opening ports for each cups are provided.

The cup manifold 25 can be held in place on the service manifold 100 with automatically operable clamps, shown schematically as pivoting clamps 46 operated with air cylinders 46A and mounted on the service manifold. Valves 46B for the air cylinders 46A are controlled by the controller 97 to operate the air cylinders 46A and open and close the cup manifold clamps 46. The clamps 46 stay with the service manifold 100, and the pivoting ends clear the cup manifold 25 as the cup manifold 25 is installed. The clamps 46 can be operated to hold the cup manifold 25 sealed against service manifold 100 for the various sampling and cleaning operations in the automatic process.

These clamps 46 are shown only schematically, and can be arranged as desired. The service manifold 100 and the cup manifold 25, when held together and clamped, will be agitated by rotating the assembly about a longitudinal axis of the service manifold when a solvent is placed into the cups 25 after the particles that are being analyzed have been passed through the impactor and particles are held in the cups. The service manifold 100 and cup manifold 25 will be rotated or tilted so that the dissolved particles in the solvent can be sampled for providing a sample to a high performance liquid chromatograph (HPLC).

After washing the cups subsequent to sampling, the service manifold can be tilted and/or rotated for draining. The zigzagged passageways, which are shown as an example, are inclined toward the drain end or the inlet end, as desired.

In some instances, the wash liquid will be directly injected into the cups, through ports in the service manifold overlying the cups, and then the rotation of the service manifold would permit draining out through those ports.

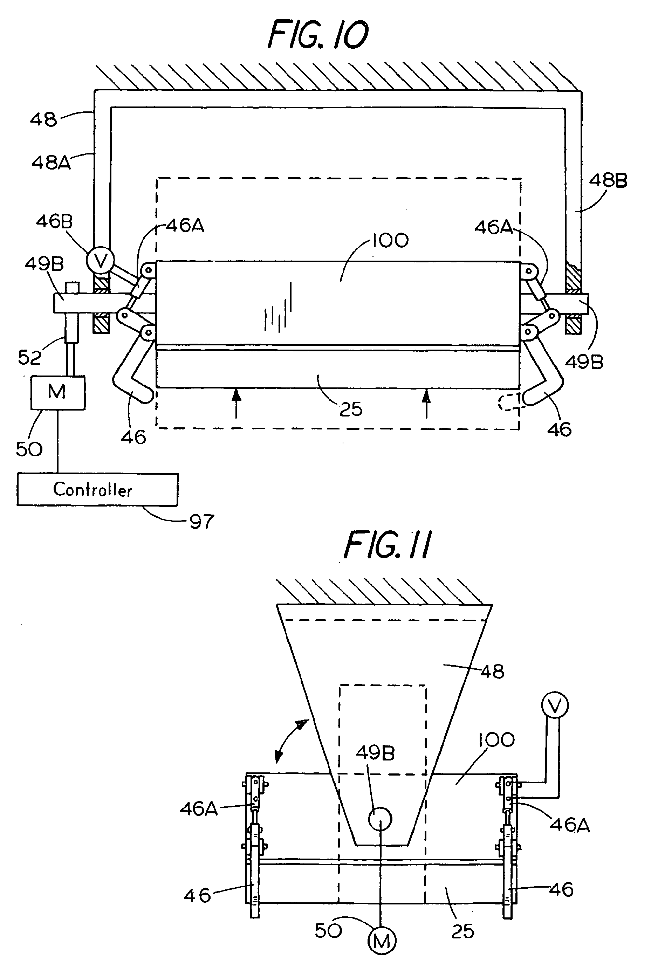

In the process that is shown, the service manifold 100 can be held in one position, and then the cup manifold moved to mate with the service manifold in that position. Schematically shown in Figures 10 and 11 is a framework 48 that is fixed to a main support, and which has depending legs 48A and 48B that have bearings at their lower ends for supporting shafts 49A and 49B on the ends of the service manifold 100. The clamps 46 are also shown in Figure 10, and it can be seen that they are in their open position, and the cup manifold 25 has been moved up, which would be done with suitable actuators, not shown, in the direction as indicated by the arrow, and the cylinders 46A are operated to move the latch members to their dotted line position holding the cup manifold 25 tight against the seals on the service manifold 100.

The shaft 49B is rotatably driven with a stepper motor or other suitable reversible controllable motor 50 operating through a gear train or suitable drive 52 to drive the shaft 49B under control. The motor 50 can be controlled by the controller 97 as part of the program for automatic operation or the shaft 49B can be manually rotated, if desired.

As shown in dotted lines, the service manifold 100 and cup manifold 25 together (as a unit) can be rotated to approximately a 90° position, as shown in Figure 11 by dotted lines, if desired, and the controller 97 operating the motor 50 will let the operator incline the service manifold 100 and cup manifold 25 as they are held together as an assembly 101 by the clamps 46 to any desired rotational position.

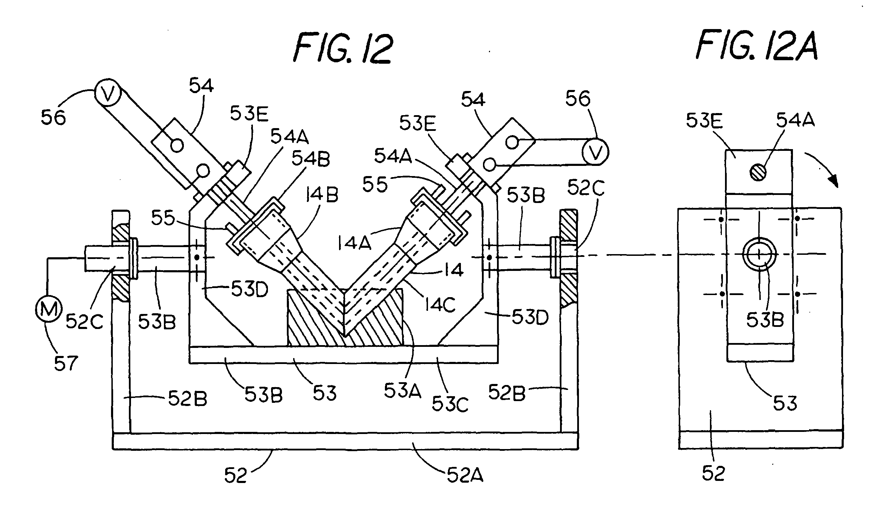

Referring to Figure 12, an apparatus for automatically holding the induction port 14 in position after it has been removed from the impactor assemblies, as will be explained, used for adding a solvent for extracting a sample, and for the washing and drying operations is illustrated. The stand or frame 52 can be supported adjacent to the impactors, and when the induction port or inlet 14 is removed from the cover, the induction port can be put into stand 52 which comprises a mixing device or cradle 53.

The cradle 53 includes a block 53A which is recessed to receive the corner portion of the USP inlet with the open ends of the induction port inclined upwardly.

The stand 52 has a base 52A, and upright end members 52B that are spaced apart, and which support bearings 52C that rotatably mount shaft portions 53B that in turn are used for supporting the cradle 53. The cradle 53 has a base 53C, and end supports 53D fixed to the base. The upright members 53D have bent wall portions 53E that are formed at substantially a 45° angle to the main upright portions of the end support 53D. These bent wall portions 53E have openings therein that slideably receive the rod portions 54A of air cylinders 54 that are mounted on these bent portions 53E. The rod portions are shown at 54A and the rod portions can be retracted by operating the cylinders 54, or can be moved to the positions shown in solid lines, to engage the end portions covering the openings of the legs 14B and 14C of the induction port 14.

The rods 54A support cup like cap members 54B that have suitable seals for sealing on the edges of the openings of the legs 14B and 14C, and also can have fittings 55 that pass through ports, to permit using the caps for injecting solvent material and letting liquid material drain. The fittings 55 can be provided at either one, or both, of the caps 54B.

When the air cylinders 54 are extended, by operating valves 56 that operate the respective air cylinder 54, under control of the controller 97, the caps 54B will be sealed against the open ends of the induction port 14, so that the interior induction port passageways are sealed. Suitable solvents for the particles on walls of the interior walls of the induction port can be added into the interior by operating charge valves through the connections 55. The connections 55 are connected to flexible lines so that the cradle 53 can be moved about the axis of the shafts 53B by operating a motor 57, which again is controlled by the controller 97. The motor 57 can be a stepper motor or other reversible motor. Pneumatic motors also can be' utilized, if desired.

The cradle 53 can be moved so that the induction port 14 can be rotated up 180° around, if needed, and the solvent that is retained inside the tubular inlet will flow back and forth as the inlet is rocked or agitated, and the solvent will contact all the interior surfaces of the tubular sections to insure that any particles that are left in the inlet tube are accounted for by dissolving the particles in the solvent.

By tilting the cradle 53 so that the connections 55 in the cups 54B (and the open ends of the inlet 14) are extending downwardly, and draining liquid from both ends through connections 55, a sample can be obtained for an analysis which can be done automatically as well. Then, wash water and drying air can be introduced automatically with the rotary valves such as that shown later in the disclosure.

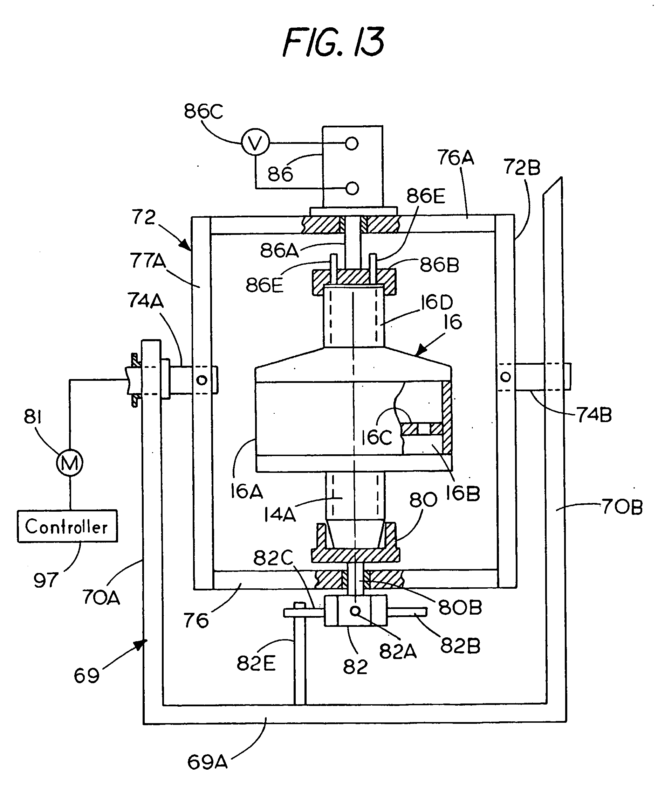

Figure 13 shows an arrangement for dissolving particles in and removing samples from and washing the preseparator 16. The outer configuration of the preseparator is differently shaped from that shown schematically in Figure 1. The preseparator is used for classifying large particles, and thus it is necessary to extract a sample of particle content from the preseparator as well. The preseparator 16 is formed with an outer wall 16A that defines an interior chamber 16B, and there is a dividing wall 16C that acts as an impactor plate for material coming in through the inlet line or pipe 16D.

The line or pipe 14A at the bottom of the inlet 16 joins the inlet opening to the impactor cover. Pipe 14A forms the outlet of the preseparator 16.

The fixture for handling the preseparator for sample extraction of the present invention includes a frame 69 that has a base 69A supporting upright members 70A and 70B, that in turn rotatably mount a cradle 72. The cradle 72 has shafts 74A and 74B that are rotatably mounted on suitable bearings on the upright members 70A and 70B of the frame 69. The cradle 72 has a lower cross support member 76 and an upper cross support member 76A joining the side members 72A and 72B. The lower cross member 76 supports a cup 80 that will receive the end of the outlet pipe 14A and form a seal on it. The cup 80 is supported on a cross member 76 and has a shaft 80B that rotates in a bearing in the cross member 76. A turnstile drive member 82 is mounted on the shaft 80B, and has a plurality of arms, four as shown, that protrude out from the center of the turnstile at 90° intervals and will engage an upright drive 82E. The arms are shown at 82A, and 82B and 82C. The fourth arm protrudes outwardly from the turnstile in an opposite direction from the arm 82A.

The cup 80 will freely rotate, if desired. Post 82E fixed to the base 69A acts as an actuator for the turnstile, so that when the cradle 72 is moved past so the arms go past the post 82E so the arms engage past the post, the preseparator will rotate a quarter of a turn about the axis of shaft 80B. This occurs each time the turnstile drive member moves past the post 82E.

The upper cross member 76A supports a short air cylinder 86 that has a rod 86A that in turn supports a cup 86B. The rod 86A can be extended toward and retracted from the inlet tube or pipe 16D, or move down in a sealing arrangement with the pipe 16D when the preseparator 16 is held in position with a suitable robot arm handler or the like. The pneumatic cylinder 86 can be operated through a valve 86C that is controlled by the controller 97. Cap 86B also has a fitting, 86E that can be connected to suitable flexible hoses for injecting solvent, and also there can be a second or third fitting that passes through the cap 86B to carry in wash water, and also to form a drain when the unit is inverted. A mechanical threaded rod can be used in place of the actuator 86.

The lines connect to the fittings on the cap 86B must be sufficiently loose or slack so that the preseparator can be inverted in one direction of rotation, at least, or wireless controls also can be used. The cradle 72 can be rotated about the axis of the shafts 74A and 74B with a motor 81 controlled by the controller 97 in a normal manner for operating the motor to rock the preseparator, for agitating the solvent, and for positioning the preseparator 16 in the proper position for draining, capturing samples, and the like.

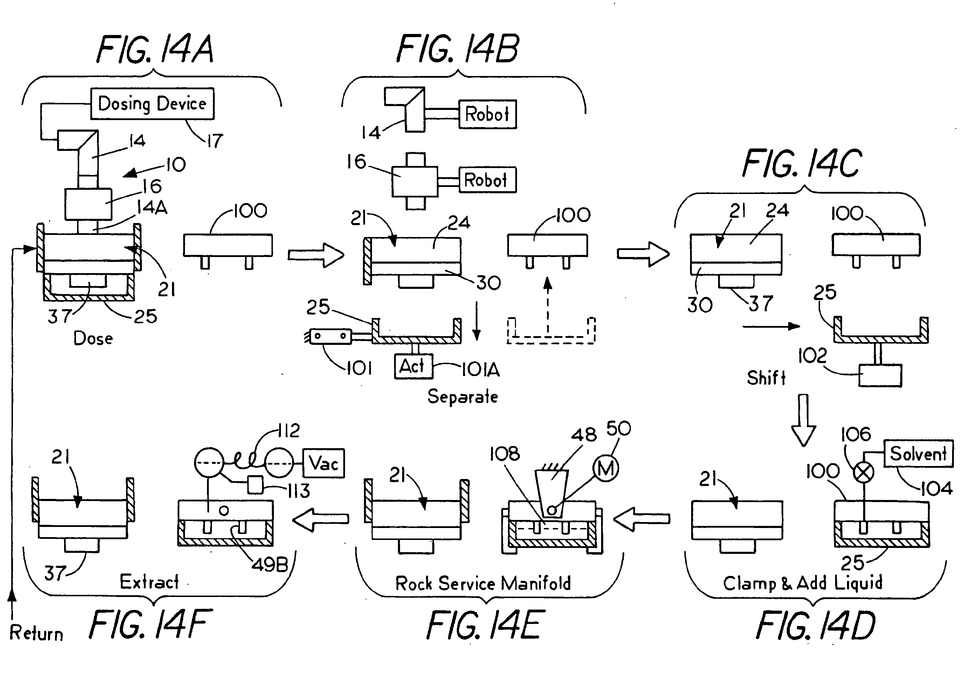

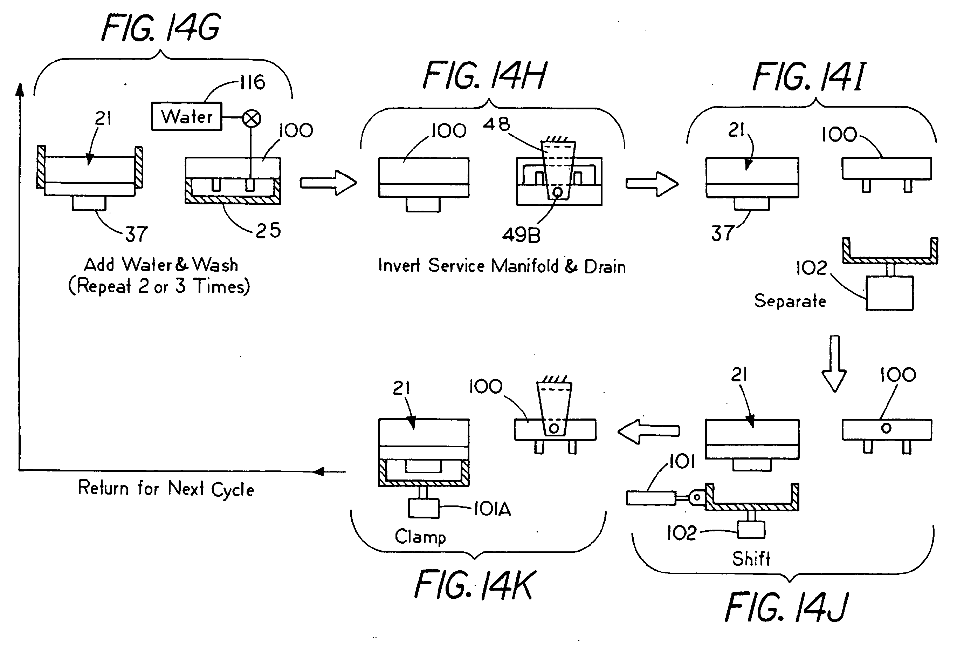

The general process of the present invention is illustrated in Figure 14A-14K, and includes the impactor assembly indicated at 10, which has the induction port 14, a preseparator 16, the cover 24 for the impactor that has the ducts and passageways that lead to various cups, which are mounted on a seal body 30. The cups may be supported in a separable frame that can be in turn supported to form an underlying cup manifold 25. The seal body 30 carries seals for sealing around the edges of the cups. It is to be understood that the devices that are shown in the process are schematically shown, but that the cup manifold can have the number of cups shown in Figures 1-7, and the agitating-moving devices can be also as described in Figures 8-12.

A dosing device 17 of standard form, such as those now commercially available provides a metered dose of a drug material into the induction port 14, such as a dry power, liquid, or some nebulized components. Additionally, a first service manifold shown at 100 is provided in the system for fitting to the cup manifold 25 and providing connections to the various liquids and gases that are used in the overall automated process for recovery of samples, from the impactor cups and for cleaning the impactor cups 32 and other components.

After an inhaler or dosing device has discharged into the induction port 14, the automation process generally follows a process whereby the impactor components are separated, and the cup manifold 25 containing the impacting surfaces holding the classified particles is then transferred to a station where solvent is added to the cups for dissolving the drug particles of interest. A sample is recovered, and the sample is then transferred to a high performance liquid chromatograph (HPLC) or other instrument for analysis. After this is done, the solvent is drained, in a suitable manner, and the cups 32 are washed and dried. Optionally, an anti-bounce coating solution is added to the cups to provide a coating on the impactor surface that will tend to make particles classified into the cups adhere in place and not bounce out. After this process, the impactor is ready to be reassembled by clamping the cups manifold 25 to the cover and seal body of the impactor.

While the cup manifold 25 is being handled and processed for recovery of samples and for washing and drying; the induction port 14 and the preseparator 16 that are used will be removed from the impactor device cover and seal body assembly 21 and will be transferred to suitable automated stations such as cradle 53 and frame 76 for sample recovery and washing in sequence. Then the induction port 14 and preseparator 16 can be reassembled onto the cover.

Referring to Figures 14A-14K, which together provide a schematic flow diagram of the automated system in the first form of the invention, the showing includes a series of process steps, separated out as the Figures 14A-14K for automated handling of the dosing, sampling, and cleaning related to the impactor device of the present invention.

As shown in Figure 14A, the impactor 10 is assembled, and receives a dose of an inhalant from a dosing device 20, such as a dry powder in a carrier of air, through the induction port 14, and into the preseparator 16, where large particles in the dose are separated out. The preseparator 16 is connected to the inlet of the seal body 30 of the cover and seal body assembly 21, called an impactor assembly through the cover, and the particle impaction takes place to separate out particles as to size into a plurality of cups 32 (specifically 32A-32H), as previously explained. The cups are either formed or removably held in a cup manifold 25.

The cup manifold 25 is to be understood as having a plurality of cups 32, each with particles or droplets in the cup classified as to size after passing through the impactor. In the next step of Figure 14B, the impactor cover 24 and seal body 30 assembly 21, which can be held stationary, is supported in place, and the cup manifold 25 is removed from the impactor assembly 21. This can be done by releasing clamps 13 and lowering the cup manifold 25 from the cover 24 and seal body 30 with an actuator shown schematically at 101A.

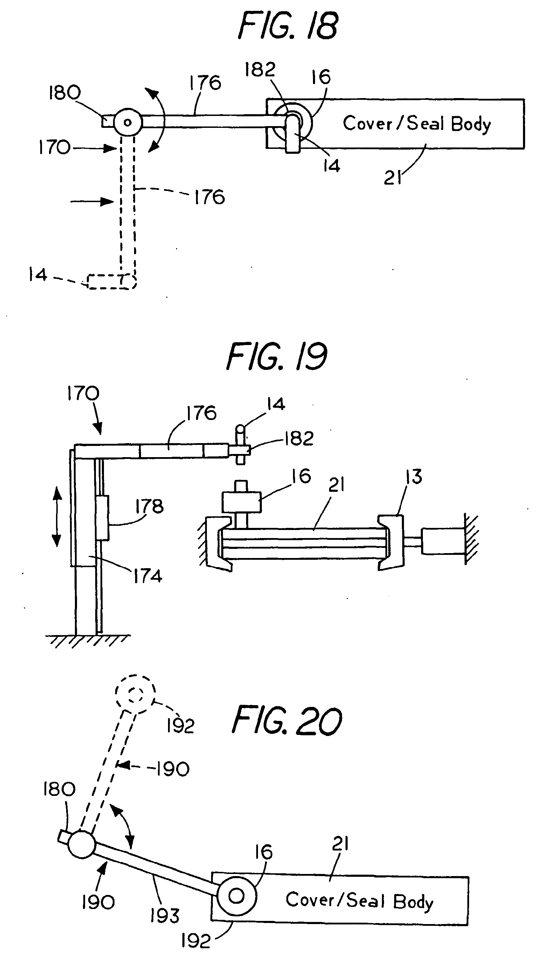

The cover 24 and seal plate 30 are supported in a selected manner or can be lifted with a robot arm after the clamps are released. Additionally, the inlet throat 14 and preseparator 16 are removed from the cover 24, and transported to the preseparator and throat sample recovery/wash station shown in Figures 12 and 13, using a robot or turret for each part as shown in Figures 18-21. Any particles of the dose material that may be clinging to the wall of the induction port 14 will be dissolved in a solution and analyzed, and the material separated out by the preseparator 16 also will be subjected to a solvent treatment for recovery, and then the preseparator 16 and induction port 14 will be washed as described in connection with Figures 12 and 13.

It should be noted that the service manifold 100 is maintained in a desired position, and the cup manifold 25 is then shifted into position under a service manifold with an actuator 101 as shown in dotted lines in Figure 14B and in solid lines in Figure 14C. The cup manifold 25 can be raised automatically once it is in position under the service manifold with an actuator (or elevator) 101A or 102 to bring the edges of the cups 32 in the cup manifold 25 up to seal against the service manifold 100, as shown in Figure 14D.

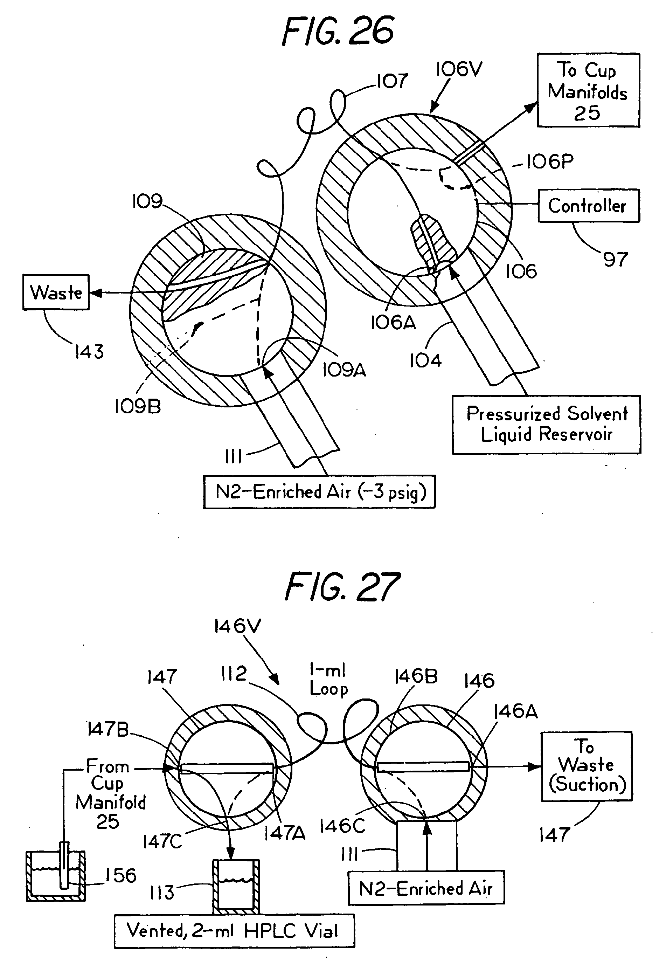

The cup manifold 25 is then in position in Figure 14D to receive a solvent from a solvent source 104. The solvent can be provided through a valve 106, and through a metering loop, as shown in Figure 26, so that a desired amount of solvent is injected into each of the cups 32 in the cup manifold 25. The solvent can be sequentially added to each cup 32A-32H, or can be simultaneously introduced into each of the cups by operation of individual valves 106 and associated metering loops for each of the cups, and operated automatically by controller 97.

Once the solvent has been introduced, the service manifold 100 is moved to a rack such as bracket 48 and mounted on pivot shafts 49B and is rocked, as shown in the process step Figure 14E. The support is the mounting frame 48 and drive as previously shown and explained in Figures 10 and 11, including the motor 50, to rock the service manifold and cup manifold 20. The solvent illustrated at 108 in each of the cups 32 in the cup manifold 25, is this agitated to insure that the classified particles from the injected dose are dissolved and formed into solution that can be analyzed in a chromatograph.

In Figure 14F, the service manifold 100 is connected to a sample recovery loop 112 shown in more detail in Figure 26, that will be automatically operated from controller 97 to transfer the desired amount of a sample containing the dissolved particles from each of the impactor cups to a chromatograph vial indicated at 113. The cup manifold 25 and service manifold 100 are inclined approximately 90° in the frame 48 to do this, so that the solvent in each of the cups drains to a particular side or end of each cup for extraction of a sample for analysis.

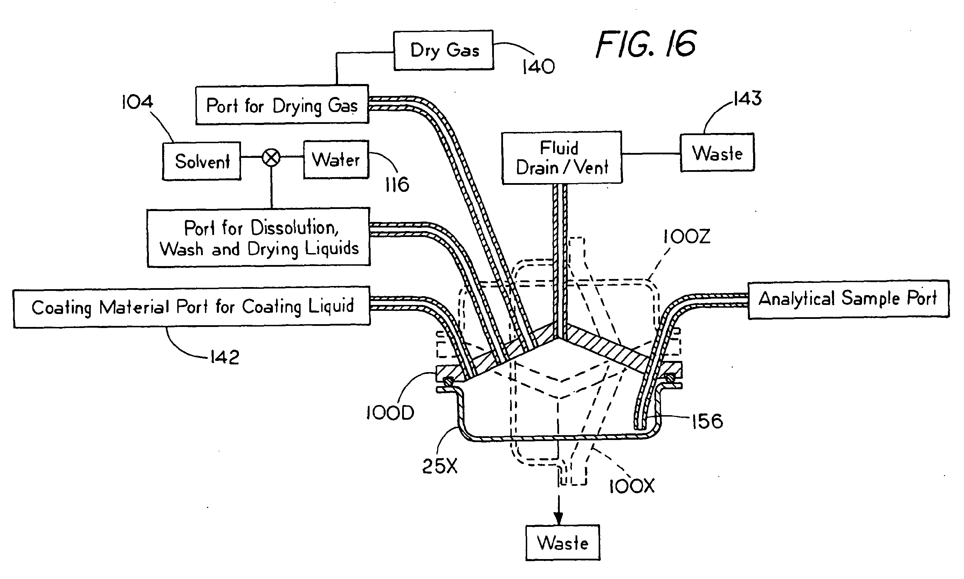

After the desired sample is extracted, the remaining solvent solution can be drained to waste by rotating the service manifold and cup manifold unit for draining, as also shown in Figure 16. As illustrated in Figure 14G, wash water can then be added from a source 116, through the service manifold 100 into the cups in cup manifold 25. The inversion of the cup manifold 25 is shown in Figure 14H so that the liquid material can be permitted to drain out in a desired manner. The wash steps of Figures 14G and 14H can be repeated and a rinse cycle can also be repeated to insure that the cups 32 are adequately cleaned for the next process.

The cover and seal plate also can be filled with solvent and rocked and then washed as well.

When the wash, and any desired rinse is done, and also, after a drying gas, which can be heated, has been used, if desired, to dry out the impaction cups 32, the cup manifold 25 is separated from the service manifold 100 by operating the latches 46 with the controller 97, and lowered with elevator 102 as shown in Figure 14I. The cup manifold 25 is then shifted through a suitable actuator 101 or other member to a position underlying the cover 24 and seal body 30 in the impactor assembly 21, and then the cup manifold 25 is raised with actuator 101A to again seal onto the cover and seal body assembly 21 and held with automatic clamps 13, operated by air cylinders 15 and controlled by controller 97. The impactor assembly 21 is again ready for operation as shown in Figure 14K. The impactor and seal body 21 is shown in Figures 14A-14K, since it remains adjacent the service manifold 100 as the service manifold and cup manifold are put through the process.

Subsequent to the washing, if desired, the cup manifold 25 can be coupled to a separate service manifold, for coating with a suitable coating that would reduce the amount of bouncing of particles.

After the fully automatic operation for recovering samples from the impaction cups 32 of the impactor 10 shown in Figures 1-7, the cleaning or washing, the drying and the return of the cup manifold 25, the preseparator 16 and induction 14 to the cover and seal body assembly 21, the impactor 10 is ready for another cycle.

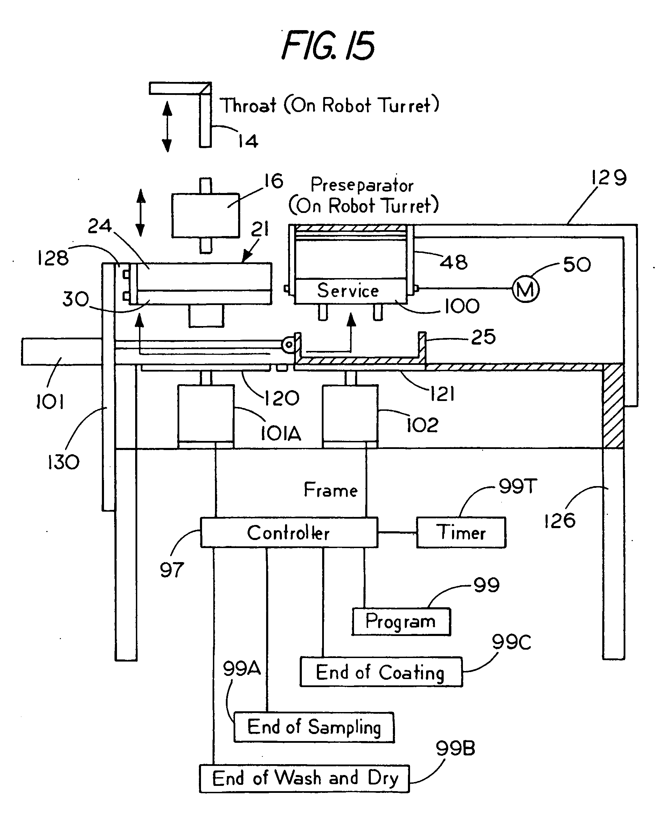

Figure 15 is a schematic representation of a typical frame that is used for carrying out the process of shifting the cup manifold 25 to the service manifold for carryout the various process steps disclosed in Figures 14A-14K. A frame 126 comprises a table that supports the cover and seal assembly 21 on a suitable bracket 128, on an upright support 130. The service manifold 100 is supported on the bracket 48 as shown in Figures 10 and 11 so that it can be rotated about a central axis on shafts 49B. The service manifold 100 is rocked and rotated with the motor 50. An arm bracket 129 for holding bracket 48 is shown schematically. The frame 126 forms a tabletop with movable sections 120 and 121 that are elevator or lift sections operated with the actuators 101A and 102.

The cup manifold 25 is shown in registry with the service manifold 100 in Figure 15, and an elevator section 121 supporting the cup manifold 25 is supported on the actuator 102. Upon raising of the cup manifold 25, a seal is made between the service manifold 100 and the edges of the cups 32A-32H and the manifold 25 and 100 can be automatically joined together with clamps 46 and then the actuator 102 retracted, all under control of controller 97, or by operator control of switches. A lateral actuator 101 is supported on a frame post 130 is used for moving the cup manifold 25 laterally from the assembly into registry with the service manifold 100 when desired. An automatic coupler can be used between the cup manifold 25 and the rod end of the actuator 101 rod. The rod can merely push the manifold over to the service manifold, but needs to be coupled for return.

The supports 129 and 48 permit the service manifold 100 to rotate 180° if desired, and also rock back and forth for agitation of the solvent, as well as for the wash and rinse cycles. These portions are illustrated in Figure 16.

The preseparator 16 and the throat are illustrated, but these are moved to their own solvent recovery and cleaning station for processing.

While the cover and seal body assembly 21 is held as an assembly in a stationary position on the frame 126 for all of the process steps described in Figures 14A-14K, after a fixed number of sampling cycles, which is determined by the operator, the cover/seal body (impactor) assembly 21 will be removed from its support for cleaning and a new impactor body assembly can be inserted in place.

The old impactor assembly 21 will be cleaned at a remote location, or off line. The impactor assembly 21 can be held in a slide frame and removed in a direction transverse to the movement of the cup manifold 25. This movement can either be done by an operator or mechanically with a turret, robots, or air cylinders as part of the automated system. A magazine of clean impactor assemblies 21 can be held on one side of the bracket 128 and a magazine for the dirty or used impactor assemblies can be on the other side of the bracket 128. Again, the impactor assembly 21 is not cleaned after each impaction or dosing cycle, because the flow through the seal body generally keeps the passages free of particles.

The service manifold 100 remains in bracket 48 as shown in Figure 16 for all of the process steps of Figures 14A-14K. The cup manifold 25 has two degrees of motion in Figures 14A-14K. It goes up and down on the elevator sections 120 and 121 using suitable actuators 101A and 102, which are schematically shown as a way of providing the motion, and moves to the left or right along the support table with actuator 101. The actuator 101 shown for left/right sliding motion also could be replaced with a chain conveyor or similar transporting device. The up and down elevator motion of the actuators 101A and 102 are used to clamp the cup manifold 25 to the cover/seal body assembly 21 or to the service manifold 100. In the case of the stationary cover and seal assembly 21, the actuator 101A may be used to hold the cup manifold 25 in a sealed position operable for the impaction process without clamping. Manually moving and attaching the cup manifold 25 to the impactor assembly 21 also can be done without undue operator time.

The actuator 102 can hold the impactor assembly up against the service manifold 100 for adding solvent and sampling, but when the service manifold is to be agitated or rotated, a suitable automatic clamping assembly such as clamp 46 is used for holding the cup manifold 25 against the service manifold 100 so the two manifolds move as a unit.

Devices such as air cylinders, as shown, racks and pinions, or stepper motors can be used for providing these necessary motions.

Figure 16 is a schematic representation of a service manifold 100D having a dome over each cup or it can be over an entire cup manifold, but each cup must be individually treated for adding solvent and sampling. Connections that can be made directly through the manifold 100D for injecting liquids into and draining from the cups 32 in the cup manifold 25. The service manifold 100D can have fittings that connect through ducts in the service manifold, either with separate connections and separate ducts, or multiple connections to one duct. The service manifold 100D provides solvent from the source 104, wash water from the source 116, dry air for drying the cups in the cup manifold 25 from a source 140, and a coating material from a source 142. All of these can be operated through the automatic valves such as valve 106 that connect separate lines to passageways shown at 144 in the service manifold. A waste drain to a waste outlet 143 is also provided.

The valve arrangements will be described in connection with Figures 26 and 27. In Figure 26 the arrangement for pre-measuring the solvent injected is shown.

In Figure 26, the valve 106, is shown as having two components namely rotary valves 106V and 109. The rotary element of valve 106 is connected at port 106A to the pressurized solvent source 104. A fixed volume sample loop line 107 connects to second valve portion 109. Valve portion 109 is connected to waste or drain 143 in the solid line position. When controller 97 is caused to move valves 106V and 109 to this solid line position, the loop line 107 fills with solvent. When the valves 106V and 109 are shifted to their dotted line position, as shown in dotted line at 109B shifts to connect a source of air under pressure 111 and this pressure causes the solvent in lines 107 to be discharged through the passage in valve 106V to position shown in dotted lines at 106P to the service manifold ports and then to the cups in the cup manifold 25. This arrangement permits automatic operation of the solvent addition to the cups 32. A separate valve arrangement 106V can be used for each cup.

In Figure 27 a valve arrangement for withdrawing a sample from each cup is shown. A valve 146V has a portion 146 that in its solid line position has a port 146A and its associated passageway connected to a vacuum source for waste 147. The common port 146B is connected to a 1 ml line sample loop 112, which is connected to a common port 147A of a valve portion 147. A port 147B is connected to a dip tube 156 (see Figure 16 as well) in a cup 32 in the cup manifold 25. This is done with the service manifold 100D rotated between 0° and 90° as shown in dotted lines at 100X in Figure 16. The desired volume (1 ml.) is captured in loop 112, and then the valve portion 146 and 147 are shifted move the internal passageways to their dotted positions. Nitrogen enriched air under pressure from the source 111, which is connected to port 146C of valve portion 146 forces the sample out of loop 112 through valve port 147C out into a vial 113 for the high performance liquid chromatograph.

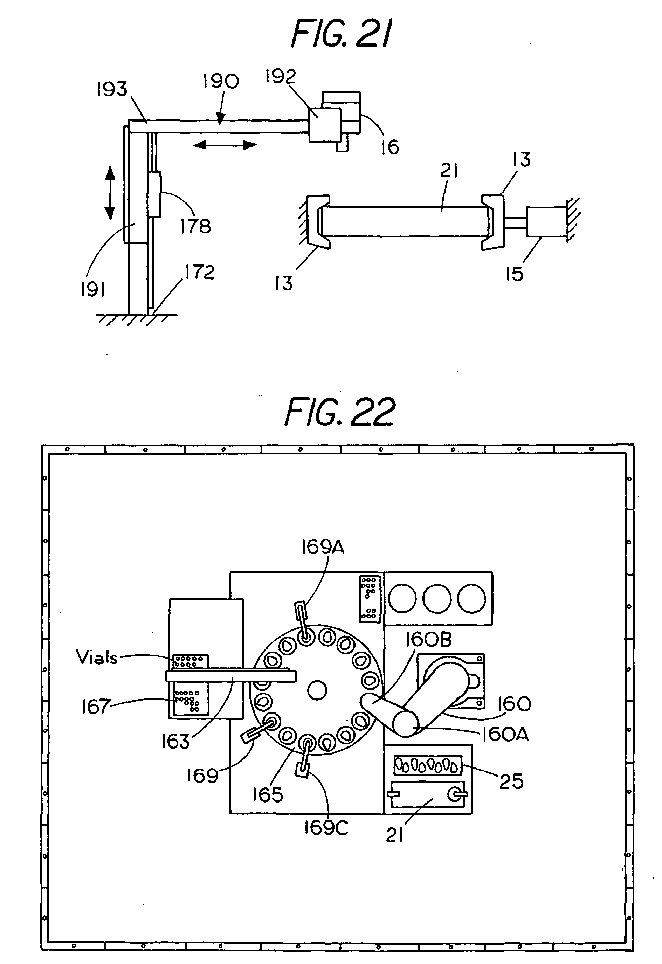

The vial 113 is moved with a robot arm shown in Figure 22, or with a standard handler such as that sold by Gilson Inc. of Middleton, Wisconsin. Automatic three axis handlers are commercially available and are shown in US-A-6,143,573 issued November 7, 2000.

The sample loop 112 can be flushed by connecting port 147C to a waste connection and leaving valve portion 146 with port 146C connected to its internal passageway shown in dotted lines to purge the loop 112 with nitrogen enriched air from a source 111.

A separate dip tube 156 can be provided for each of the cups 32A-32H, and connected through valves similar to those shown schematically for drawing out a sample volume set by loop 112.

The dip tube 156 can also be connected directly to a syringe that will draw out the sample after the solvent has been agitated sufficiently to dissolve the particles in the cups, and then the syringe can be operated to directly deposit the sample into a vial 113. For flushing, water can be injected with a suitable valve and draining can be done by inverting the service manifold 100 or 100D to its position shown in dotted lines at 100Z in Figure 16.

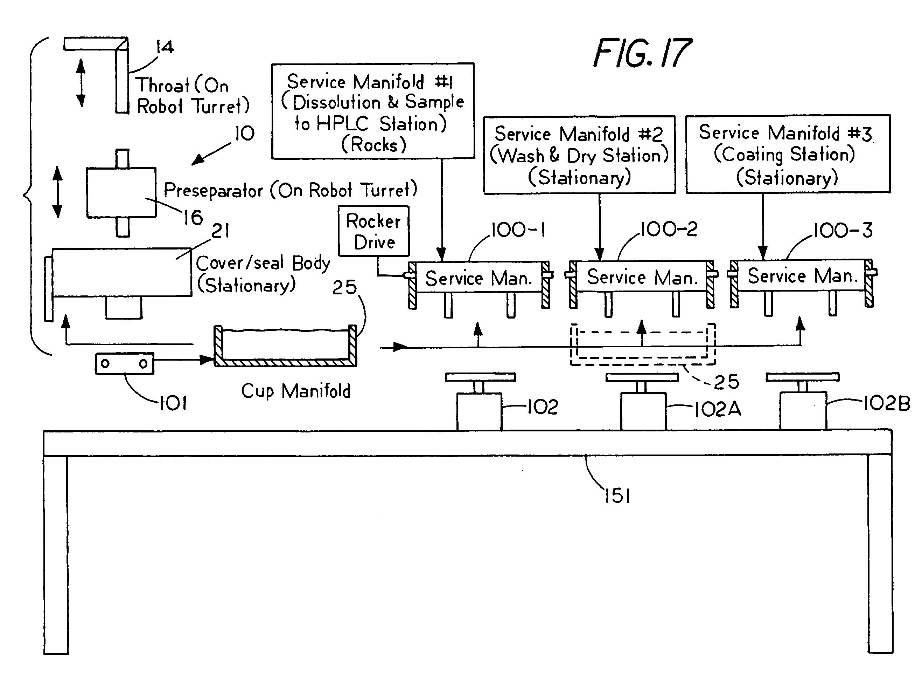

Referring specifically to Figure 17, a simplified schematic of the use of three separate service manifolds, 100-1, 100-2, and 100-3, is illustrated. In this form, a frame 151 is made to support the impactor assembly 10, which is shown separated in this Figure with the induction port or inlet 14, the preseparator 16, and the impactor assembly 21 illustrated and separated. The induction port 14 is being held on the robot turret described in the following Figures 18 and 19, and the preseparator is being held on the robot turret described in the following Figures 20 and 21. The robot arms can be of selected design and many are known.

The cup manifold 25, is shown separated from the cover and seal body or impactor assembly 21, and it is shiftable by an actuator 101. The distance across the frame 151 is greater than shown before, so the actuator can be used in stages, or can be a long actuator that will move the manifold 25 all the way across the frame 151.

The elevators that have been shown can be used again, with the actuator 102 used for raising and lowering the cup manifold 25 relative to the first service manifold 100-1 where the dissolution of particles in an injected solvent and a sample for the liquid chromatograph would be obtained. In this station, the service manifold would be rocked as previously explained.

After the sample is obtained the cup manifold 25 is moved to the service manifold 100-2. An elevator 102A can be used for raising and lowering the cup manifold 25 after it is shifted into alignment, and mating it with the service manifold 100-2 which is the wash and dry station. In this instance, a service manifold configuration similar to that shown in Figures 8 and 9 can be utilized for the wash and dry operation.

An elevator 102B can be used for raising the cup manifold 25 up to seal on the service manifold 100-3, where the cups 32 can be coated with a suitable coating material before the cup manifold 25 is placed back onto the cover and seal body assembly 21.

A single service manifold does not have to serve all of the functions, but a frame that has several service manifolds operated automatically in sequence can be used. The controller 97 can be used, and sensors that indicate the ends of cycles can provide signals to the controller, or a timer 99T can be used for each operation, as shown at 99A, 99B and 99C in Figure 15.

The controller 97 operates the elevators 102, 102A and 102B and a suitable lateral shifting device such as that shown as actuator 101. Separate devices could be used between each of the service manifolds, or a conveyor chain can be used for moving the cup manifold 25 laterally across the frame 151 once it is separated from the cover and seal body assembly 21.

Figure 18 is a top plan view of a typical turret or robot arm 170 that can be used for handling the induction port of inlet 14, for recovery of particles that may have been clinging to the wall of the induction port 14 and also for cleaning.

As shown, the turret or robot arm indicated at 170 may be any desired form. It is mounted on a suitable support 172 on a frame that is adjacent to or on the same frame as that shown in Figure 15 in one form of the invention, shown in additional forms of the invention. The turret or robot arm includes a column 174 (Figure 19), and a laterally extending arm 176. The column 174 is made so that the arm 176 can be raised and lowered vertically along the column 174 using a suitable drive indicated at 178 this can be a motor or actuator. The arm 176 also is mounted for rotation about the column 174 with a suitable ring gear or other type of drive 180. A gripper 182 is provided at the outer end of the arm 176, and this gripper can be pneumatically actuated or otherwise actuated to open, and then close to grip around the cylindrical, vertical section of the induction port 14. Because the cover/seal body assembly 21 is secured in place, the gripper 182 can grip the induction port 14, and then the actuator or drive 178 can be operated to lift the arm 176 and remove the induction port from the preseparator 16. The preseparator can be gripped with its own turret or robot arm, as will be explained, so that the separation of the parts occurs at the right place.

The drive 180 then can be operated to rotate the arm 176 and induction port 14 to position it in a bracket or fixture, as previously shown in Figure 12, for sample recovery by injection of a solvent, and subsequent washing and draining. The valves shown in Figures 26 and 27 can be used for the operations solvent injection, sample recovery and wash as described in connection with Figure 12.

Figures 20 and 21 show a separate turret or robot arm 190 is illustrated for handling the preseparator assembly 16. Again, because the cover and seal body assembly 21 is secured in place, the preseparator 16 can be removed from the cover and seal body assembly 21 by a vertical motion. In this case, the turret or robot arm assembly 190 that is identical in construction to the arm described in Figures 18 and 19 is provided with a gripper 192 that is of size to grip the preseparator 16, and can be automatically operated to open and close to grip the preseparator.

Then, the actuator or drive 178 on the post or support 191 for the passing and lowering the turret or robot arm 190 can be operated to lift the preseparator 16 up, and the drive 180 can rotate the lateral arm 193 of the robot arm assembly 190 to a desired position where the preseparator will be placed into a fixture for adding solvent, and to provide a sample of any particles that may be impacted or classified in the preseparator 16. This sample is drawn out and transferred to a vial for a chromatograph for analysis and forms part of the overall sample being recovered. The preseparator 16 then can be washed, rinsed and dried in the fixture shown in Figure 13. The injecting solvent and sampling operations could be done with the valves shown in Figures 26 and 27.

It should be noted that in both the operations for the preseparator 16 and the inlet 14, the grips can have wrist actions so that they can be rotated about at least two axes, to accomplish the rocking or agitation that is necessary for insuring that the solvent dissolves the particles, and that the unit is adequately washed. This would then eliminate the need for separate fixtures for rocking or agitating the cup manifold and solvent.

Multiple axis operation of grippers is well known in the field and many automatic vial handlers use grippers that rotate.

As shown in Figure 15 a central controller 97 can be used for controlling all of the operations through a suitable program represented at 99. The program can control the operations of the various movements of the cup manifold, the rotation of the service manifold, and other operations including the wash operations, drying operations, and the solvent recovery operations so that sequentially the actions will take place as programmed in from the program 99. All of the valves, cylinders, and motors, including those of the turret arms that have been described can be controlled from the controller 97. Sensors can be utilized, as shown, for determining ends of cycles or timers 99T can be utilized for timing the operations for washing and the like.

In Figure 22, a plan view of a typical full robot arm assembly that can be used with the present invention using a turntable 165 is illustrated. The robot arm 160 is a 3-axis robot arm that has an elbow joint 160A, and a gripper end 160B. Cup manifold 25 is shown in one spot, and the cover and seal plate assembly 21 is also shown adjacent the cup manifold 25. The robot arm can pick up individual cups, if they are removable or can do sampling, with the cup manifold 25 at the position shown. A further vial handler robot arm 163 is positioned on an opposite side of a turntable 165 from the robot arm 160, and it can pick up vials that are held on the turntable 165, or vials that have been filled, and put them into a storage container 167, as shown,

Various work stations 169A, 169B, and 169C can be provided as needed for operation of the overall automated system of recovering samples and transferring them to a manifold or magazine for a chromatograph.

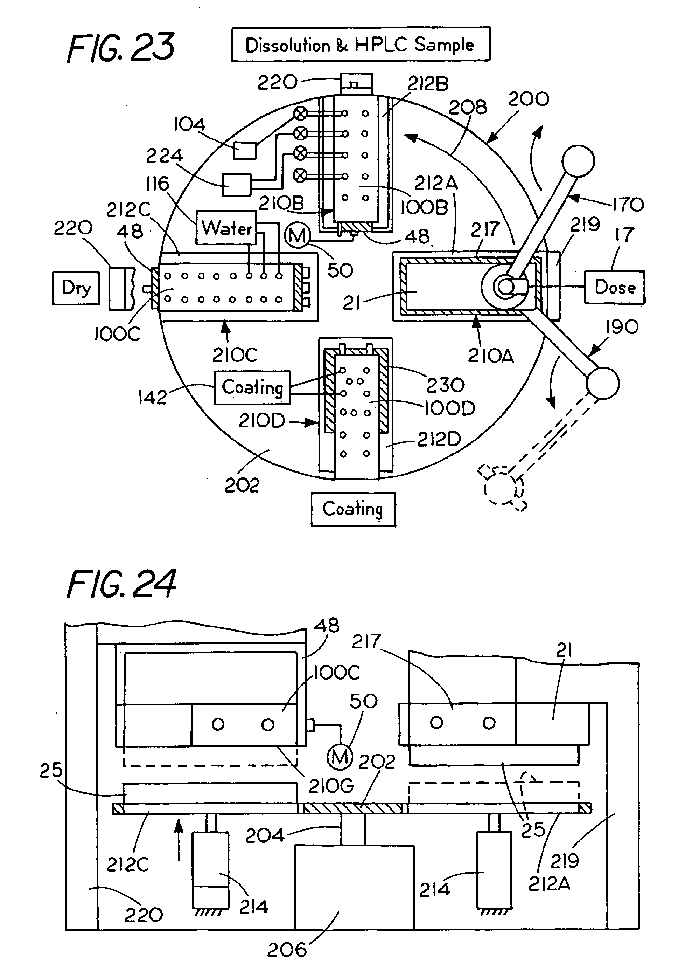

In Figures 23 and 24, a turntable indicated at 200 is represented as a form of the invention in which the operational devices can be positioned relative to the turntable, in particular the service manifolds. A plurality of service manifolds can be used, one for each of a selected number of operations.

The turntable 200 is mounted onto a support at a desired height (Figure 24), and as shown the table member 202 is supported on a center shaft 204 that is driven through a power drive 206. The table 202 rotates in the direction as indicated by the arrow 208 in Figure 23, from the base station where particle dosing and impaction takes place, indicated generally at 210A. After the dosing device 17 is operated, the cup manifold is movable to a plurality of additional stations, using service manifolds. In the station 210A, the automatic dosing device 17 is provided for charging the inlet or induction port 14, and then the impactor that has the passageways for causing the fluid or aerosol introduced by the dosing device 17 to pass through various classification stages and nozzles to impact particles onto cups 32 in the underlying cup manifold 25.

In this form of the invention, the turntable as shown has four stations, and each of the stations has an underlying elevator platform 212A, 212B, 212C and 212D. Each of these elevator platforms is supported on a suitable actuator or operator 214, so that it can be raised up from the plane of the table 202 to support the cup manifold 25 that it underlies. The actuators 214 can be air cylinders or screw actuators.

In the form shown in Figures 23 and 24 at station 210A, the elevator platform 212A would be raised to support the cup manifold 25 held on cover and seal plate after the impaction has taken place, and after release of clamps such as clamp 13, the cup manifold 25 is lowered.

It should be noted that the cover and seal plate or compactor assembly 21 in Figure 23 is mounted in a fixed frame 217 that has side members that come up along the sides of the compactor assembly 21 to support it in place. A vertical post support 219 that supports frame 217 is supported to the exterior of the indexing table 202, so it is out of the way.

The turntable 200 can be indexed to any one of four different positions, using the drive 206 in a normal manner with a controller, and when the cup manifold 25, which has been lowered by elevator 212A is rotated to the position 210B, it is underlying a service manifold 100B, that is connected to sources of solvent 104, so that suitable solvent can be injected as shown in Figure 26, and in this station the service manifold 102B is mounted onto the frame 48, that will permit rotating or rocking the service manifold 100B about a generally horizontal axis that extends longitudinally of the service manifold. The frame 48 can be supported on an upright 220 similarly to the mounting frame 129 in Figure 15, and driven by motor 50 so that it can be rocked or moved back and forth about the horizontal axis to agitate or oscillate the solvent, to form a solution of the particles that are being analyzed.

Once the solution has been adequately agitated, so that the liquid containing dissolved particles can be sampled, a sampling device indicated generally at 224 and as shown in Figure 27 is connected to the service manual 100B to extract the samples from each of the cups 32, and transfer to vials 113 for the chromatograph, in the form generally as shown in figure 27.

The elevator platform 212B is then raised back up, to support the cup manifold 25, the cup manifold is released from the service manifold 100B (it would have been clamped in place with clamps 46) and the table 202 is indexed to the station 210C where a second service manifold 100C is positioned in a frame, which can be a fixed frame so the service manifold is held stationary. A frame 48 for rotatably mounting the manifold 100C about a horizontal, longitudinally extending axis is shown for illustrative purposes. The shafts that mount the service manifold 100C can be driven with the motor 50. The cup manifold 25 may be held with clamps 46 as previously shown. The elevator platform 212C is raised to position the underlying cup manifold 25 up against the service manifold 100C, and suitable wash water from a source 116 is provided.

This is shown schematically, but each of the cups would be washed. When done, the clamps 46 would be released, elevator platform 212C would be lowered, after the cup manifold 25 is clamped onto the service manifold 100C. The service manifold 100C can be oscillated around its longitudinal axis. The connections to the wash water source 116 would be flexible so that the service manifold 100C could be inverted for draining after the wash had been completed as shown in Figure 16. Two or more washes can be carried out, as well as a rinse cycle. The water source 116 could be something other than plain water, if desired. The wash cycle also can take place at service manifold 100B.

At station 210C a suitable dry gas can be introduced to the interior of the cups in the cup manifold for drying the cups. This can merely be air or some other dry gas from the source 140.

When the cup manifold 25 under the service manifold 100C is being serviced, a second cup manifold is provided to the service manifold 102B and the second cup manifold then can be provided with the solvent for dissolving the particles, and providing a sample to the chromatograph.

After the cup manifold under the service manifold 100C has been dried, the elevator platform 212C would be raised, the cup manifold 25 would be released, and the elevator platform 212C would be lowered. The table 202 would then again be indexed, and at the same time the cup manifolds under the stations 210A and 210B can be supported on the respective elevator platforms and the table 202 then indexed one place to bring the initial cup manifold underneath the coating service manifold shown at 100D, at station 210D. The service manifold 100D is provided to a source of coating material as is well known, and which is indicated at 142. The actuator for the elevator platform would travel with the turntable.

The coating process involves applying a liquid containing a coating material in a solvent in each of the cups, and letting the solvent carrying the coating material evaporate. This drying also can be done by providing a source of dry air to the manifold in station 210D as well. Service manifold 100D is used after the elevator 212D had been raised to hold the cup manifold 25 against the service manifold 100D. The service manifold 100D is held in a fixed frame 230 and clears the turntable. The manifold 100C also can be in a fixed frame as the wash is done at service manifold 100B.

The turntable can be indexed one cup manifold at a time, depending on how quickly the induction port 14, and the preseparator 16 can be subjected to solvents, samples removed, and then cleaned. If this occurs rapidly, the number of cup manifolds that can be placed under the impactor assembly 21 at the station 210A can be increased so that there would be more than one cup manifold being processed on the turntable at a time. However, even with a complete indexing, the robot arms that are shown schematically in Figures 18-21 can be used for handling the throat 14 and the preseparator 16 as described to recover the needed samples and wash and dry the induction port and preseparator.

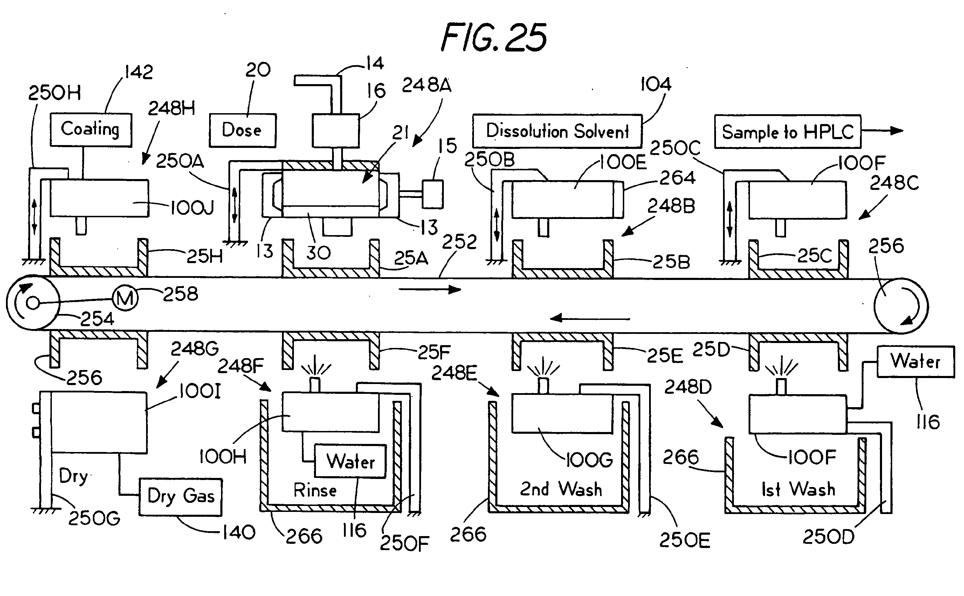

Figure 25 shows a still further modified form of the invention, which is shown only schematically, and in this instance, a cover and seal plate or impactor assembly 21 is shown mounted onto a frame 250A that can be vertically moved, relative to a conveyor belt 252. The conveyor belt 252 is mounted on suitable pulleys or drums 254 and 256, and the pulleys or drums can be driven with a motor 258. The conveyor belt 252 is supported on suitable supports so that it does not deflect substantially, and it supports a plurality of cup manifolds 25A-25H that are fixed to the conveyor and which are sequentially used. The conveyor belt 252 can be intermittently operated, or in other words can move between the individual stations that are illustrated, and stopped as much as desired or as long as desired in each of the stations.

The frame 250A is capable of being raised and lowered, so that the cover and seal plate assembly 21 can be moved to mate with and seal on the individual cup manifold shown at 25A, for impaction from a dosing device 20 through the induction port 14, and the preseparator 16, as previously explained, at an impaction station 248A.

After the impaction of the dose from the dosing device 17, the conveyor belt 252 is moved by operating the motor 258 to a second station 248B, where a service manifold 100E is positioned on a vertically movable frame 250B.

The service manifold 100E is one where the solvent for dissolution of the particles is provided from a solvent source 104, and when the frame 250B lowers the manifold 100E onto a cup manifold 25B, the solvent is injected into each of the cups as explained, using the metering valves of Figure 26. In this instance, other types of agitation of the solvent can be used such as an air agitator that would be part of the station 248B and would be provided through the same passageways as the solvent from source 104. Additionally, a vibrator, such as an ultrasonic vibrator indicated at 264 can be used on or in the service manifolds or cup manifolds for vibrating them to agitate the solvent adequately.

After the solvent has been agitated, the conveyor belt 252 can be indexed to station 248C where the sampling device such as a syringe indicated at 114 is connected to a manifold 100F. The manifold 100F is also operated with a vertically movable frame 250C to permit it to seal on a cup manifold 25C, so that a liquid or gas sample can be removed and sent to a vial for a chromatograph suitable analyzing instrument, again using the valves and lines previously shown.

The frame 250C is used for moving the service manifold 100F down against the edges of the cup manifold 25C for sealing before the sample is retrieved.

When the sample has been retrieved from each of the cups 32 in the cup manifold, the conveyor belt 252 is indexed again, and it is in station 248D that the cup manifolds shown at 25D can be inverted, and a service manifold 100G can direct a water from a source 116 upwardly into the cup manifold 25D. This will provide a wash at each of the cups 32, and the wash water can flow out into a waste receptacle 266, for draining or capture. The frame 250D for supporting the service manifold 100F can be fixed into position, or can be movable up to seal the service manifold 100F against the edges of the cup manifold 25D, if desired.

In a station 248E, a second wash can be provided, in the same manner as the first wash using a service manifold 100G to provide a second wash from water source 116. A second waste receptacle 266 can be used for providing water that drains out, or if desired, again, the service manifold 100G can be raised to seal against the cup manifold 25E if desired.

At the next station 248F a cup manifold 25F is provided with a rinse from a service manifold 100H, providing water from a source 116. Again, a waste receptacle 266 can be provided for catching the water that is draining out, and sending it to drain.

At the station 248G, a cup manifold 25G is supported above a service manifold 100I to provide dry gas on the interior of the cup manifold 25G from the gas source 140. This service manifold 100I also can be fixedly mounted, so that the dry gas merely blows up into the interior of the cup manifold 25G. After indexing again, to a station 248H, the cup manifold 25H is positioned upright, and a service manifold 100J can be used for providing a coating material from a coating source 142. The service manifold 100J may be mounted on a vertically moveable frame 250H to seal on the cup manifold 25H, if desired, as well.

Then, after the coating has taken place at each of the cups 32, in the cup manifold 25H, the process will start again for the cup manifold by indexing to the station 248A where the dosage device 17 would provide a metered dose from an inhaler into the underlying cups in the cup manifold 25A.

It should be noted that the cover and seal plate or impactor assembly 21, when it is removed for cleaning, can be removed with a robot arm such as that shown for operating and moving the preseparator and the induction port 14 as shown in Figure 22, or it can be made in a cartridge type arrangement where they can be interchanged when needed for cleaning.

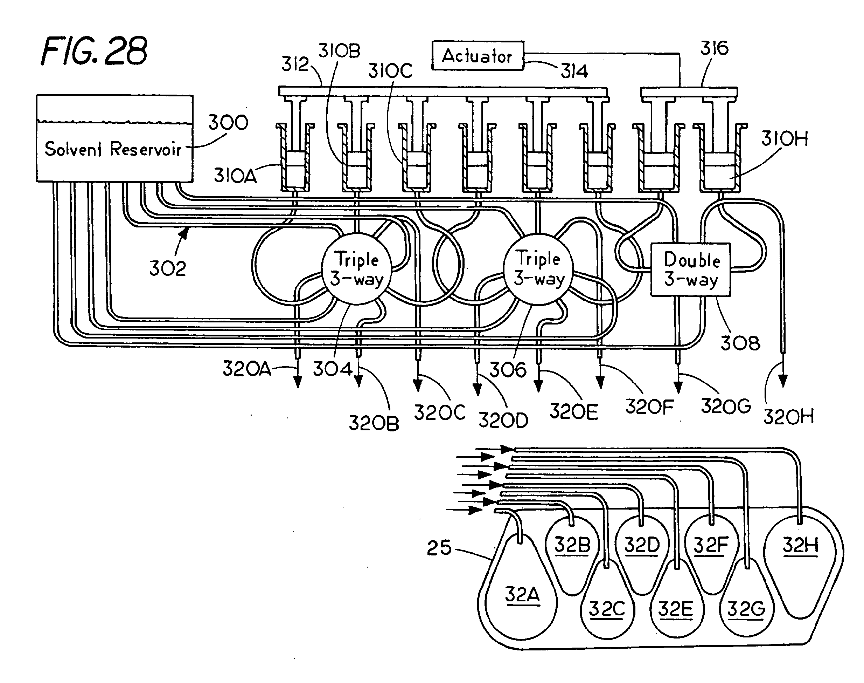

In Figure 28, a schematic showing of another form of injector used for injecting solvents from a reservoir simultaneously, or substantially simultaneously, into the individual cups of a cup manifold is illustrated schematically. A solvent reservoir indicated at 300 connected with eight lines indicated generally at 302, to individual valves 304, 306 and 308. The valves 304 and 306 are triple valves that are three-way valves that will permit rotating and connecting three different lines to inputs or outputs as desired. A double three way valve for two inputs is shown in the valve 308.

Each of these valves has a port connected to one of a plurality of syringe solvent injectors 310A-310H. As can be seen, the injectors 310A-310F are smaller sized than the syringes 310G and 310H, and are ganged together with a bar 312, onto which an actuator 314 is connected for moving the plungers on the interior of the syringes to first intake solvent for the reservoir 300 when the valves are appropriately set to connect the lines 302 through the valves to the input ends of the syringes. The syringes 310G and 310H have an actuator bar 316 that also is connected to the actuator 314, which is a power actuator, and will be operated substantially simultaneously with the bar 312.

There is a charge in each of the barrels of the syringes 310A-310H, as shown in Figure 28 in the present state, the actuator 314 is reversed to move the plungers toward the closed ends of the barrels of these syringes, and at the same time the valves 304, 306 and 308 are set to provide connections from the interior of each of the individual syringes to an associated output line 320A-320H. These lines in turn are connected to the individual cups 32A-32H, as illustrated schematically. The solvent can be precisely measured by movement of the syringes, and injected into the lines to the individual cups. The larger size cups that are shown, are the ones that would receive the greater amount of solvent from the syringes 310G and 310H.

The triple three and double three way valves are commercially available valves than can be operated by the controller 97 under a selected program. With the device of Figure 28, there is no need for zigzag passageways in the service manifold.

Although the present invention has been described with reference to preferred embodiments, workers skilled in the art will recognize that changes may be made in form and detail without departing from the scope of the invention.

## Claims

1. A method of processing particles classified into separate size ranges in an impactor (10), each size range of particles being in one of a plurality of separate impactor compartments (32A-32H) supported on a common compartment manifold (25), comprising the steps of moving the compartment manifold and supported separate compartments (32A-32H) from the impactor to a service manifold (100) overlying all of the compartments (32A-32H) and securing the compartment manifold (25) and service manifold (100) together, **characterised by** the steps of adding a solution for dissolving material into each of the compartments through passageways (44A) in the service manifold, and simultaneously moving the compartment manifold (25) and service manifold (100) as a unit under power to enhance dissolution of particles in each compartment.

2. The method of claim 1 including removing a liquid sample from the compartments in the compartment manifold (25) after moving the manifolds (25, 100).

3. The method of either of claims 1 or 2, wherein the step of moving the compartment manifold (25) and service manifold (100) as a unit comprises placing the compartment manifold and service manifold as a unit onto a support (48, 49) pivotable about an axis and rocking the support about the axis with the compartment manifold secured to the service manifold.

4. The method of claim 1 including removing a liquid sample from each compartment, adding liquid for washing in the compartments after removing the liquid sample, rocking the compartment manifold (25) containing wash liquid for washing about an axis to agitate the wash liquid, draining the wash liquid, and adding a rinsing liquid to each of the compartments through the service manifold (100).

5. The method of claim 4 including draining the rinse liquid from the compartments, and introducing a flow of dry gas through the service manifold to dry surfaces of the compartments.

6. The method of either of claims 4 or 5 further **characterized by** the impactor comprising an impactor housing (21) forming a plurality of passageways (40A-40G) for a flow of a gas containing particles for impaction, the impactor compartments each positioned to receive flow from the selected passageways in the impactor housing (21) with particles to be classified by the impactor, and a plurality of connections to the service manifold (100) for providing ports (144, 156) opening from the service manifold to each of the compartments in the compartment manifold (25) received by the service manifold (100), the method of recovering samples from the compartments in the compartment manifold and cleaning the compartments in the compartment manifold including the steps of initially passing a gas carrying particles to be impacted and analyzed through the passageways (40A-40G) of the impactor housing, and thereafter moving the compartment manifold (25) to the service manifold (100).

7. The method of either claims 2 or 4 including the further step subsequent to moving the service manifold (100) and compartment manifold (25) as a unit, of holding the service manifold (100) in a position about the axis which inclines impaction surfaces in each of the compartments to cause liquid in the compartments to drain to a side of the respective compartment, and thereafter performing the step of removing a liquid sample from each of the compartments.

8. The method of claim 6 wherein the step of removing comprises providing an outlet passage from each of the compartments, subjecting the outlet passage to a vacuum and trapping a known volume of liquid removed from each of the compartments in a separate passageway external of the impactor cup manifold.

9. The method of claim 8 wherein there is an induction port (14) removably connected to an inlet opening in the impactor through which a gas carrying particles to be classified is passed, and the method including removing the induction port when the compartment manifold (25) is removed from the impactor housing, moving the induction port to a processing station, positioning the induction port (14) such that the induction port will retain liquid, introducing liquid solvent into the induction port, rocking the induction port about an axis to cause particles in the induction port to be engaged by the liquid, and removing a liquid sample from the induction port.

10. The method of claim 9, including the step of moving the compartment manifold (25) toward the impactor prior to passing a gas and particles through the induction port (14) to the impactor housing, and wherein the moving step comprises moving the compartment manifold away from the impactor housing, shifting the compartment manifold (25) laterally of the impactor housing to a position underlying the service manifold (100), moving the compartment manifold and service manifold into sealing engagement, prior to securing the compartment manifold and service manifold together.

11. An impactor processing apparatus including an impactor housing (21), a plurality of separate impactor compartments (32A-H) supported on a common compartment manifold (25) for receiving classified particles passed through the impactor housing, the impactor housing including an induction port (14) at an inlet thereof, and a preseparator (16) connected to the induction port and to an inlet of the impactor housing, said impactor processing apparatus further comprising a service manifold (100) having inlet passageways (44, 45) and a plurality of ports therein, the service manifold including means for supporting the compartment manifold and impactor compartments on the service manifold with the ports of the service manifold aligned with impactor compartments (32A-H) on the compartment manifold (25), **characterized in that** if further comprises a source of a liquid solvent connected through valves to the inlet passageways (44, 45) of the service manifold, and selectively, a source of wash liquid and a source of drying gas connected to the inlet passageways of the service manifold, and a support for rocking the service manifold (100) and a supported compartment manifold about an axis.

12. The impactor processing apparatus of claim 11, further **characterized by** a plurality of service manifolds (100), the service manifolds including, respectively, connections to the source of liquid solvent, the source of wash liquid, and the source of drying gas, such that each of the service manifolds will support a compartment manifold sequentially to provide sequentially liquid solvent, wash liquid and drying gas to impactor compartments of supported on the compartment manifold (25).

## Patentansprüche

1. Verfahren zum Verarbeiten von in separate Größenbereiche klassifizierten Partikeln in einem Impaktor (10), wobei sich jeder Größenbereich von Partikeln in einem von einer Vielzahl von separaten Impaktorabteilen (32A-32H) befindet, die von einer gemeinsamen Abteilverteilerleitung (25) getragen werden, umfassend die Schritte: Bewegen der Abteilverteilerleitung und der getragenen separaten Abteile (32A-32H) von dem Impaktor zu einer Versorgungsverteilerleitung (100), die über allen Abteilen (32A-32H) liegt und Befestigen der Abteilverteilerleitung (25) und der Versorgungsverteilerleitung (100) aneinander, **gekennzeichnet durch** die Schritte: Hinzufügen einer Lösung zum Auflösen von Material in jedes Abteil **durch** Durchgänge (44A) in der Versorgungsverteilerleitung, und simultanes kraftbetriebenes Bewegen der Abteilverteilerleitung (25) und der Versorgungsverteilerleitung (100) als eine Einheit, um die Auflösung der Partikel in jedem Abteil zu verbessern.

2. Verfahren nach Anspruch 1, umfassend das Entnehmen einer Flüssigkeitsprobe aus den Abteilen in der Abteilverteilerleitung (25) nach dem Bewegen der Verteilerleitungen (25, 100).

3. Verfahren nach einem der Ansprüche 1 oder 2, wobei der Schritt des Bewegens der Abteilverteilerleitung (25) und der Versorgungsverteilerleitung (100) als eine Einheit das Platzieren der Abteilverteilerleitung und der Versorgungsverteilerleitung als eine Einheit auf einem um eine Achse drehbaren Träger (48, 49) umfasst, und das Schwingen des Trägers um die Achse, wobei die Abteilverteilerleitung an der Versorgungsverteilerleitung befestigt ist.

4. Verfahren nach Anspruch 1, umfassend das Entnehmen einer Flüssigkeitsprobe aus jedem Abteil, Hinzufügen einer Flüssigkeit zum Waschen in die Abteile nach dem Entnehmen der Flüssigkeitsprobe, Schwingen der Abteilverteilerleitung (25), welche die Waschflüssigkeit zum Waschen enthält, um eine Achse, um die Waschflüssigkeit in Bewegung zu versetzen, Ablassen der Waschflüssigkeit, und Hinzufügen einer Spülflüssigkeit in jedes Abteil durch die Versorgungsverteilerleitung (100).

5. Verfahren nach Anspruch 4, umfassend das Ablassen der Spülflüssigkeit aus den Abteilen und Einführen eines Stroms von Trockengas durch die Versorgungsverteilerleitung zum Trocknen der Oberflächen der Abteile.

6. Verfahren nach einem der Ansprüche 4 oder 5, weiterhin **dadurch gekennzeichnet, dass** der Impaktor ein Impaktorgehäuse (21) umfasst, das eine Vielzahl von Durchgängen (40A-40G) für einen Strom eines Gases bildet, das Partikel für den Aufprall enthält, wobei die Impaktorabteile jeweils positioniert sind, um einen Strom von den ausgewählten Durchgängen in dem Impaktorgehäuse (21) mit den von dem Impaktor zu klassifizierenden Partikeln zu empfangen, und eine Vielzahl von Verbindungen zu der Versorgungsverteilerleitung (100) zum Bereitstellen von Anschlussöffnungen (144, 156), die sich von der Versorgungsverteilerleitung zu jedem Abteil in der Abteilverteilerleitung (25) öffnen, aufgenommen von der Versorgungsverteilerleitung (100), wobei das Verfahren des Gewinnens von Proben von den Abteilen in der Abteilverteilerleitung und des Reinigens der Abteile in der Abteilverteilerleitung die Schritte umfasst: zu Beginn Hindurchleiten eines Gases, das die aufzuprallenden und zu analysierenden Partikel trägt, durch die Durchgänge (40A-40G) des Impaktorgehäuses, und danach Zubewegen der Abteilverteilerleitung (25) auf die Versorgungsverteilerleitung (100).

7. Verfahren nach einem der Ansprüche 2 oder 4, umfassend den weiteren Schritt im Anschluss an das Bewegen der Versorgungsverteilerleitung (100) und der Abteilverteilerleitung (25) als eine Einheit: Halten der Versorgungsverteilerleitung (100) in einer Position um die Achse, welche die Prallflächen in jedem Abteil neigt, so dass die Flüssigkeit in den Abteilen zu einer Seite des jeweiligen Abteils abläuft, und danach Durchführen des Schritts des Entnehmens einer Flüssigkeitsprobe aus jedem Abteil.

8. Verfahren nach Anspruch 6, wobei der Schritt des Entnehmens das Bereitstellen eines Austrittsdurchlasses aus jedem Abteil umfasst, Anwenden eines Vakuums auf den Austrittsdurchlass und Auffangen eines bekannten Volumens an entnommener Flüssigkeit aus jedem Abteil in einem separaten Durchgang außerhalb der Impaktorbecherverteilerleitung.

9. Verfahren nach Anspruch 8, wobei ein Ansaugkanal (14) abnehmbar mit einer Einlassöffnung in dem Impaktor verbunden ist, durch welche ein Gas, das die zu klassifizierenden Partikel trägt, hindurchgeleitet wird, und wobei das Verfahren das Entfernen des Ansaugkanals umfasst, wenn die Abteilverteilerleitung (25) von dem Impaktorgehäuse entfernt wird, das Bewegen des Ansaugkanals zu einer Verarbeitungsstation, das Positionieren des Ansaugkanals (14) auf solche Art, dass der Ansaugkanal Flüssigkeit behält, das Einführen eines flüssigen Lösungsmittels in den Ansaugkanal, das Schwingen des Ansaugkanals um eine Achse, damit die Partikel in dem Ansaugkanal von der Flüssigkeit eingebunden werden, und das Entnehmen einer Flüssigkeitsprobe aus dem Ansaugkanal.

10. Verfahren nach Anspruch 9, umfassend den Schritt des Bewegens der Abteilverteilerleitung (25) in Richtung Impaktor vor dem Hindurchleiten von Gas und Partikeln durch den Ansaugkanal (14) zu dem Impaktorgehäuse, und wobei der Schritt des Bewegens das Wegbewegen der Abteilverteilerleitung von dem Impaktorgehäuse umfasst, das Verschieben der Abteilverteilerleitung (25) seitwärts von dem Impaktorgehäuse auf eine Position unterhalb der Versorgungsverteilerleitung (100), das Bewegen der Abteilverteilerleitung und der Versorgungsverteilerleitung in einen dichtenden Eingriff, vor dem Befestigen der Abteilverteilerleitung und der Versorgungsverteilerleitung aneinander.

11. Impaktor-Verarbeitungsvorrichtung umfassend ein Impaktorgehäuse (21), eine Vielzahl von separaten Impaktorabteilen (32A-H), getragen auf einer gemeinsamen Abteilverteilerleitung (25) zum Aufnehmen klassifizierter Partikel, die durch das Impaktorgehäuse geleitet werden, wobei das Impaktorgehäuse einen Ansaugkanal (14) an einem Einlass des Impaktorgehäuses umfasst, und einen Vortrenner (16), verbunden mit dem Ansaugkanal und einem Einlass des Impaktorgehäuses, wobei die Impaktor-Verarbeitungsvorrichtung weiterhin eine Versorgungsverteilerleitung (100) mit Einlassdurchgängen (44, 45) und einer Vielzahl von Öffnungen darin umfasst, wobei die Versorgungsverteilerleitung eine Vorrichtung zum Tragen der Abteilverteilerleitung und der Impaktorabteile auf der Versorgungsverteilerleitung beinhaltet, wobei die Öffnungen der Versorgungsverteilerleitung mit den Impaktorabteilen (32A-H) auf der Abteilverteilerleitung ausgerichtet sind, **dadurch gekennzeichnet, dass** sie weiterhin eine Quelle eines flüssigen Lösungsmittels umfasst, die durch Ventile mit den Einlassdurchgängen (44, 45) der Versorgungsverteilerleitung verbunden ist, und selektiv eine Quelle einer Waschflüssigkeit und eine Quelle von Trockengas, die mit den Einlassdurchgängen der Versorgungsverteilerleitung verbunden ist, und einen Träger zum Schwingen der Versorgungsverteilerleitung (100) und eine um eine Achse gelagerte Abteilverteilerleitung.

12. Impaktor-Verarbeitungsvorrichtung nach Anspruch 11, weiterhin **gekennzeichnet durch** eine Vielzahl von Versorgungsverteilerleitungen (100), wobei die Versorgungsverteilerleitungen jeweils Verbindungen zu der Quelle des flüssigen Lösungsmittels, der Quelle der Waschflüssigkeit und der Quelle des Trockengases auf eine solche Weise einschließen, dass jede der Versorgungsverteilerleitungen aufeinander folgend eine Abteilverteilerleitung trägt, um aufeinander folgend flüssiges Lösungsmittel, Waschflüssigkeit und Trockengas für die auf der Abteilverteilerleitung (25) getragenen Impaktorabteile bereitzustellen.

## Revendications

1. Procédé de traitement de particules classées en gammes de tailles séparées dans un impacteur (10), chaque gamme de taille de particule se trouvant dans l'un de multiples compartiments séparés (32A-32H) de l'impacteur supportés sur un collecteur commun (25) de compartiments, comprenant les étapes qui consistent à déplacer le collecteur de compartiment et les compartiments séparés supportés (32A-32H) de l'impacteur jusqu'à un collecteur de services (100) s'étendant au-dessus de la totalité des compartiments (32A-32H) et à assujettir l'un à l'autre le collecteur de compartiments (25) et le collecteur de services (100), **caractérisé par** les étapes qui consistent à ajouter une solution pour dissoudre de la matière dans chacun des compartiments par l'intermédiaire de passages (44A) dans le collecteur de services, et à déplacer simultanément en un bloc le collecteur (25) de compartiments et le collecteur de services (100) sous énergie pour renforcer la dissolution de particules dans chaque compartiment.

2. Procédé selon la revendication 1, comprenant le fait d'enlever un échantillon de liquide des compartiments dans le collecteur (25) de compartiments après avoir déplacé les collecteurs (25, 100).

3. Procédé selon l'une des revendications 1 et 2, dans lequel l'étape de déplacement du collecteur (25) de compartiments et du collecteur (100) de services en un bloc comprend la mise en place du collecteur de compartiments et du collecteur de services en un bloc sur un support (48, 49) pouvant pivoter autour d'un axe et le fait de faire basculer le support autour de l'axe avec le collecteur de compartiments assujetti au collecteur de services.

4. Procédé selon la revendication 1, comprenant le fait d'enlever un échantillon de liquide de chaque compartiment, d'ajouter du liquide pour un lavage dans les compartiments après l'enlèvement de l'échantillon de liquide, de faire basculer le collecteur (25) de compartiments contenant le liquide de lavage, pour un lavage, autour d'un axe afin d'agiter le liquide de lavage, de vidanger le liquide de lavage et d'introduire un liquide de rinçage dans chacun des compartiments à travers le collecteur de services (100).

5. Procédé selon la revendication 4, comprenant la vidange du liquide de rinçage depuis les compartiments, et l'introduction d'un écoulement de gaz sec par l'intermédiaire du collecteur de services pour sécher les surfaces des compartiments.

6. Procédé selon l'une des revendications 4 et 5, **caractérisé en outre en ce que** l'impacteur comporte un corps (21) d'impacteur formant de multiples passages (40A-40G) pour un écoulement de gaz contenant des particules pour une impaction, les compartiments de l'impacteur étant positionnés chacun de façon à recevoir un écoulement provenant des passages sélectionnés dans le corps (21) de l'impacteur avec des particules devant être classées par l'impacteur, et de multiples raccordements au collecteur de services (100) pour établir des orifices (144, 156) s'ouvrant du collecteur de services vers chacun des compartiments dans le collecteur (25) de compartiments reçus par le collecteur de services (100), le procédé de récupération d'échantillons depuis les compartiments dans le collecteur de compartiments et de nettoyage des compartiments dans le collecteur de compartiments comprenant les étapes qui consistent à faire passer initialement un gaz transportant des particules devant être impactées et analysées dans les passages (40A-40G) du corps de l'impacteur, et à déplacer ensuite le collecteur (25) de compartiments vers le collecteur de services (100).

7. Procédé selon l'une des revendications 2 et 4, comprenant l'étape supplémentaire, subséquente au déplacement du collecteur de services (100) et du collecteur de compartiments (25) d'un seul bloc, qui consiste à maintenir le collecteur de services (100) dans une position autour de l'axe qui incline des surfaces d'impaction dans chacun des compartiments pour amener un liquide se trouvant dans les compartiments à être vidé vers un côté du compartiment respectif, et à exécuter ensuite l'étape d'enlèvement d'un échantillon de liquide de chacun des compartiments.

8. Procédé selon la revendication 6, dans lequel l'étape d'enlèvement consiste à établir un passage de sortie depuis chacun des compartiments, à soumettre le passage de sortie à une dépression et à piéger un volume connu de liquide enlevé de chacun des compartiments dans un passage séparé, extérieur au collecteur à coupelles de l'impacteur.

9. Procédé selon la revendication 8, dans lequel il y a un orifice d'induction (14) raccordé de façon amovible à une ouverture d'entrée dans l'impacteur à travers lequel un gaz transportant des particules devant être classées passe, et le procédé comprenant l'enlèvement de l'orifice d'induction lorsque le collecteur de compartiments (25) est enlevé du corps de l'impacteur, le déplacement de l'orifice d'induction jusqu'à un poste de traitement, le positionnement de l'orifice d'induction (14) de façon que l'orifice d'induction retienne du liquide, l'introduction d'un solvant liquide dans l'orifice d'induction, le basculement de l'orifice d'induction autour d'un axe pour que le liquide vienne en contact avec les particules se trouvant dans l'orifice d'induction, et l'enlèvement d'un échantillon de liquide de l'orifice d'induction.

10. Procédé selon la revendication 9, comprenant l'étape de déplacement du collecteur (25) de compartiments vers l'impacteur avant le passage d'un gaz et de particules à travers l'orifice d'induction (14) vers le corps de l'impacteur, et dans lequel l'étape de déplacement consiste à éloigner le collecteur de compartiments du corps de l'impacteur, à décaler le collecteur de compartiments (25) latéralement du corps de l'impacteur jusqu'à une position s'étendant en-dessous du collecteur de services (100), à amener le collecteur de compartiments et le collecteur de services en contact d'étanchéité, avant d'assujettir l'un à l'autre le collecteur de compartiments et le collecteur de services.

11. Appareil de traitement à impacteur comprenant un corps (21) d'impacteur, de multiples compartiments séparés (32A-H) d'impacteur supportés sur un collecteur commun (25) de compartiments pour recevoir des particules classées passées à travers le corps de l'impacteur, le corps de l'impacteur présentant un orifice d'induction (14) à une entrée de ce corps, et un séparateur préalable (16) raccordé à l'orifice d'induction et à une entrée du corps de l'impacteur, ledit appareil de traitement à impacteur comportant en outre un collecteur de services (100) renfermant des passages d'entrée (44, 45) et de multiples orifices, le collecteur de services comprenant des moyens destinés à supporter le collecteurs de compartiments et les compartiments de l'impacteur sur le collecteur de services, les orifices du collecteur de services étant alignés avec les compartiments (32A-H) de l'impacteur sur le collecteur de compartiments (25), **caractérisé en ce qu'**il comporte en outre une source d'un solvant liquide raccordée par des vannes aux passages d'entrée (44, 45) du collecteur de services et, sélectivement, une source de liquide de lavage et une source de gaz de séchage raccordées aux passages d'entrée du collecteur de services, et un support destiné à faire basculer autour d'un axe le collecteur de services (100) et un collecteur de compartiments supportés.

12. Appareil de traitement à impacteur selon la revendication 11, **caractérisé en outre par** plusieurs collecteurs de services (100), les collecteurs de services comprenant, respectivement, des raccordements à la source de solvant liquide, à la source de liquide de lavage et à la source de gaz de séchage, de manière que chacun des collecteurs de services supporte séquentiellement un collecteur de compartiments pour fournir séquentiellement du solvant liquide, du liquide de lavage et du gaz de séchage à des compartiments de l'impacteur supportés par le collecteur (25) de compartiments.
